# EUROPÄISCHE PATENTANMELDUNG

(11) **EP 4 723 473 A1**
(43) Veröffentlichungstag der Anmeldung: **08.04.2026**
(21) Anmeldenummer: 24204333.9
(22) Anmeldetag: 02.10.2024
(51) Int. Cl.: H02S 20/10, F24S 25/12, F24S 25/617, F24S 25/65

(54) **PHOTOVOLTAIK-ANLAGE MIT VERBESSERTER TRAGKONSTRUKTION**

(71) Anmelder: Next2Sun Technology GmbH, 66763 Dillingen (DE)
(72) Erfinder: Hildebrandt, Heiko, 79110 Freiburg (DE); Hoff, Florian, 66709 Weiskirchen (DE); Bendix, Peter, 79117 Freiburg (DE); Gabriel, Marina, 66763 Dillingen (DE); Anschütz, Jonathan, 66557 Illingen (DE)
(74) Vertreter: Mertzlufft-Paufler, Cornelius

(57) **Zusammenfassung**

Es wird ein neuer Ansatz vorgestellt, mit dem eine Tragkonstruktion (1) zum Tragen von bifazialen PV-Modulen (2) erhalten werden kann, die in Bezug auf Fertigungskosten aber auch in Bezug auf mechanische Stabilität optimiert ist. Hierzu wird vorgeschlagen, an Halteabschnitten (7) von jeweiligen Pfosten (4) der Tragkonstruktion (1), an welchen PV-Module (2) oder die PV-Module (2) tragende horizontal verlaufende Riegel (5) befestigt sind, jeweilige Querschnittsverjüngungen (24) auszubilden, um so das mechanische Flächenträgheitsmoment des Pfostens (4) lokal gezielt einstellen und gleichzeitig eine Materialersparnis erzielen zu können

## Beschreibung

Die Erfindung betrifft eine Tragkonstruktion, die bifaziale Photovoltaik(PV)-Module tragen kann und die Merkmale gemäß dem Oberbegriff von Anspruch 1 aufweist, sowie eine zugehörige PV-Anlage. Daneben beschäftigt sich die Erfindung noch mit einer spezifischen Verwendung von Längsprofilen, die als jeweilige Halteabschnitte von jeweiligen Pfosten einer solchen Tragkonstruktion eingesetzt werden können, sowie mit einem Verfahren zur Herstellung von Pfosten, die in einer wie eingangs erwähnten Tragkonstruktion eingesetzt werden können.

PV-Anlagen mit aufrecht stehend montierten, bifazialen PV-Modulen zeigen zahlreiche technische Vorteile und sind nicht zuletzt deshalb interessant, weil diese auf landwirtschaftlich genutzten Flächen errichtet werden können. Je nach Standort können dabei bei starken Unwettern enorme Windlasten auftreten, die auf die großflächigen Module wirken, wobei die dabei entstehenden Kräfte über die Pfosten ins Erdreich abgeleitet werden müssen. Eine grundlegende Gefahr besteht hierbei darin, dass die verwendeten Pfostenprofile an bestimmten Stellen Schwachpunkte aufweisen können, mit der Folge, dass die Pfosten bei sehr hohen Windlasten punktuell einknicken können.

Bei der Auslegung der Tragkonstruktion von solchen PV-Anlagen ist aber nicht nur die mechanische Festigkeit der Pfosten ein wesentlicher Gesichtspunkt, sondern es müssen auch Punkte wie Materialeinsatz, Knickneigung, Profilform, Lage der Schubmitte, Lastangriff, Möglichkeit der Kabelführung etc. berücksichtigt werden.

Von diesem Hintergrund ausgehend liegt der Erfindung die Aufgabe zugrunde, eine Tragkonstruktion für PV-Anlagen mit bifazialen PV-Modulen zur Verfügung zu stellen, die trotz geringem Materialeinsatz eine hervorragende Widerstandsfähigkeit gegen hohe Windlasten aufweist. Gleichzeitig soll die Tragkonstruktion kostengünstig mit üblichen Massenfertigungsverfahren herstellbar sein.

Zur Lösung dieser Aufgabe sind erfindungsgemäß bei einer Tragkonstruktion die Merkmale von Anspruch 1 vorgesehen. Insbesondere wird somit vorgeschlagen, dass sich ein Querschnitt des jeweiligen Halteabschnitts des jeweiligen Pfosten (also insbesondere ein Querschnitt von wenigstens einem den Halteabschnitt ausbildenden Längsprofil) in einer Längsrichtung des jeweiligen Pfostens nach oben (in Bezug auf die finale Montagestellung des Pfostens in der Tragkonstruktion) hin derart verjüngt, dass über wenigstens 20% (vorzugsweise über wenigstens 30%, besonders bevorzugt über wenigstens 40%) einer Gesamtlänge des Halteabschnitts (bzw. des den Halteabschnitt ausbildenden wenigstens einen Längsprofils) eine Querschnittsverjüngung ausgebildet ist. Das jeweilige lokale Ausmaß der Querschnittsverjüngung kann dabei durch Vergleich mit einem maximalen Querschnitt des Halteabschnitts ermittelt werden, wobei der Halteabschnitt im Bereich seines maximalen Querschnitts die größte lokale mechanische Festigkeit bietet. Ist der Halteabschnitt mehrteilig ausgestaltet, beispielsweise aus zwei ineinander gesteckten Längsprofilen, so muss der Gesamtquerschnitt betrachtet werden, der von beiden Teilen / Profilen in der Summe bereitgestellt wird.

Alternativ oder aber ergänzend hierzu kann eine erfindungsgemäße Verjüngung des Querschnitts des jeweiligen Halteabschnitts der Pfosten aber auch so ausgestaltet sein, dass ein mechanisches Gesamt-Flächenträgheitsmoment des Halteabschnitts (beispielsweise ein aufsummiertes Flächenträgheitsmoment aller den Halteabschnitt ausbildenden Längsprofile in einer bestimmten Querschnittsebene), in der Längsrichtung des Pfostens nach unten hin, um wenigstens 20 %, vorzugsweise jedoch um wenigstens 30 %, zunimmt. Unter Flächenträgheitsmoment, oftmals auch als Flächenmoment zweiten Grades bezeichnet, wird hier die aus dem Gesamt-Querschnitt abgeleitete geometrische Größe verstanden, die in der Festigkeitslehre verwendet wird, um Verformungen und mechanische Spannungen bei Biege- oder Torsionsbeanspruchung eines Pfostens zu berechnen. Mit Hilfe des Flächenträgheitsmomentes können insbesondere diejenigen Belastungen berechnet werden, deren Überschreiten zum Abknicken des Halteabschnitts / des Pfostens führen würde. Das jeweilige lokale mechanische Flächenträgheitsmoment lässt sich dabei aus dem jeweiligen örtlichen Querschnitt des Halteabschnitts ermitteln. Den hier interessierenden Querschnitt (genauer die relevante Querschnittsfläche) bilden dabei sämtliche Teile des Halteabschnitts bzw. des jeweiligen Längsprofils bzw. der jeweiligen Längsprofile, die zum mechanischen Flächenträgheitsmoment beitragen. Die in Bezug auf die Knickfestigkeit der Pfosten in unterschiedlichen z-Höhen jeweils zu betrachtende Querschnittsebene verläuft dabei jeweils senkrecht zu einer Längsrichtung (z-Richtung) des Pfostens. Ist der Halteabschnitt mehrteilig ausgestaltet, beispielsweise aus zwei ineinander gesteckten Längsprofilen, so muss hinsichtlich der Festigkeit des Pfostens das gesamte Flächenträgheitsmoment betrachtet werden, das von beiden Teilen / Profilen in der Summe bereitgestellt wird.

Vorteilhaft an einer solchen Verjüngung ist die damit erzielbare Materialersparnis, während gleichzeitig an den relevanten Stellen, nämlich im unteren Bereich des jeweiligen Halteabschnitts, eine ausreichende mechanische Festigkeit gewährleistet werden kann, damit der jeweilige Pfosten die Windlasten, die am jeweiligen Standort auftreten, sicher aufnehmen kann. Das Wort Standort kann sich hierbei auf einen geographischen Standort beziehen, da Windlasten regional unterschiedlich ausfallen können; es kann sich aber auch auf einen Standort innerhalb der PV-Anlage / der Tragkonstruktion beziehen, weil auch in kleinem Maßstab die Windlast variiert. Mit anderen Worten eröffnet die Ausgestaltung der erfindungsgemäßen Verjüngungen an den Pfosten die Möglichkeit, die mechanische Festigkeit des jeweiligen Pfostens maßzuschneidern, weil der Verlauf der Verjüngung und damit das lokale Flächenträgheitsmoment je nach lokalem Standort des Pfostens innerhalb der PV-Anlage / der Tragkonstruktion unterschiedlich gewählt werden kann, und zwar selbst dann, wenn von gleichen Rohmaterialien bei der Herstellung der Pfosten ausgegangen wird. Muss der Pfosten somit an seinem Standort sehr hohe Kräfte aufnehmen, kann die Verjüngung weniger stark ausgebildet sein. Sind die Windlasten hingegen geringer, kann die Verjüngung stärker ausgeprägt und so Material und Kosten eingespart werden.

Um eine relevante Materialersparnis bei der Herstellung des jeweiligen Halteabschnitts zu ermöglichen, kann erfindungsgemäß insbesondere vorgesehen sein, dass die Querschnittsverjüngung über mindestens 40%, vorzugsweise über mindestens 50% oder sogar über mindestens 60%, einer Gesamtlänge des Halteabschnitts bzw. des den Halteabschnitt ausbildenden Längsprofils ausgestaltet ist. Das Längsprofil oder der Halteabschnitt weist somit an seinem unteren Ende den größten Querschnitt auf und verjüngt sich nach oben hin entlang seiner Längsrichtung, vorzugsweise kontinuierlich über die besagte Länge hinweg oder beispielsweise stufenförmig (insbesondere bei zweiteiliger Ausgestaltung des Halteabschnitts mittels zweier Längsprofile).

Als Halteabschnitt des Pfostens werden hier diejenigen Abschnitte des Pfostens angesehen, welche die PV-Module (typischerweise vermittelt über Halteelemente und/oder Riegel) tragen. Beispielsweise können an den Halteabschnitten der Pfosten Riegel befestigt sein, die jeweils zwei benachbarte Pfosten miteinander verbinden. In diesem Fall können die PV-Module, insbesondere mittels Modulhaltern/Halteelementen, an den Riegeln montiert, insbesondere aufgehängt, sein, wobei die Halteabschnitte dann die Riegel samt PV-Modulen tragen.

Es sind aber auch Tragkonstruktionen mit erfindungsgemäß ausgestalteten Pfosten möglich unter Verzicht auf horizontal verlaufende Riegel: So können die PV-Module auch, insbesondere vermittelt über entsprechende Halteelemente, direkt an den Halteabschnitten der Pfosten montiert sein. In diesem Fall sind die PV-Module somit zwischen den Pfosten angeordnet und verbinden diese miteinander.

Der Halteabschnitt kann mehrteilig, zum Beispiel aus zwei, drei oder mehr Teilen aufgebaut sein, wie noch genauer erläutert werden wird.

Die Pfosten der Tragkonstruktion sind ebenfalls bevorzugt mehrteilig ausgestaltet. Sie können (müssen aber nicht zwingend) insbesondere in einen jeweiligen mit dem Erdreich verbundenen (bzw. verbindbaren) unteren Befestigungsabschnitt und den jeweiligen mit dem Befestigungsabschnitt mittelbar oder unmittelbar verbundenen (oberen) Halteabschnitt unterteilt sein. In diesem Fall kann sich der jeweilige Halteabschnitt des Pfostens ausschließlich oberhalb des Erdreichs erstrecken, während nur der Befestigungsabschnitt, nicht aber der Halteabschnitt, im Erdreich verankert ist. Die Befestigungsabschnitte der Pfosten können dabei, wie bereits üblich, als, vorzugsweise C- oder I-förmige, Rammprofile ausgestaltet und/oder in das Erdreich eingerammt sein. D.h. die Befestigungsabschnitte können mittels Längsprofilen ausgebildet sein. Der Halte- und der Befestigungsabschnitt können im Bereich einer flächigen Verbindung (Überlappungsbereich) beispielsweise miteinander verschraubt werden, um so einen stabilen Pfosten auszugestalten. Gemäß einer bevorzugten Ausgestaltung trägt der Befestigungsabschnitt dabei keine Riegel oder PV-Module, sondern lediglich den Halteabschnitt (an welchem Riegel und/oder PV-Module montiert sind).

Eine mögliche, jedoch weniger bevorzugte, Ausgestaltung sieht vor, dass der Halteabschnitt des Pfostens (welcher die Riegel und/oder PV-Module hält) teilweise durch einen unteren Befestigungsabschnitt des Pfostens mit ausgebildet ist, der im Erdreich befestigt/verankert ist. Bei einer solchen zweiteiligen Ausgestaltung des Pfostens ist somit wenigstens ein Riegel oder wenigstens ein PV-Modul vom dem im Erdreich verankerten/befestigten Befestigungsabschnitt des Pfostens gehalten bzw. an diesem montiert. Ein weiterer Riegel oder das oder ein weiteres PV-Modul können dabei von einem oberen Längsprofil gehalten sein, welches den Halteabschnitt des Pfostens mit ausbildet.

Eine erfindungsgemäße Tragkonstruktion kann auch Pfosten aufweisen, die nicht in einen mit dem Erdreich verbundenen Befestigungsabschnitt (z.B. in Form eines Rammpfostens) und einen zweiten oberhalb des Erdreichs angeordneten separaten Abschnitt (z.B. über der Erde angeordnetes Profil) zweigeteilt sind. Beispielsweise können erfindungsgemäße Querschnittsverjüngungen auch dann ausgebildet werden, wenn der gesamte Pfosten durch ein im Erdreich befestigtes Profil zumindest mit ausgebildet ist, welches seinerseits durch ein zusätzliches Profil im Halteabschnitt und/oder im Befestigungsabschnitt des Pfostens verstärkt ist oder welches einen sich ändernden Querschnitt aufweist und dadurch eine erfindungsgemäße Querschnittsverjüngung im Halteabschnitt dieses einteiligen Pfostens ausbildet.

Auch in einem solchen Fall kann bei Überlappung eines Längsprofils des Halteabschnitts, welches einen oberen Teil des Halteabschnitts ausbildet, mit dem Befestigungsabschnitt eine erfindungsgemäße Querschnittsverjüngung des Halteabschnitts (also desjenigen Abschnitts des Pfostens, der die PV-Module bzw. die Riegel trägt) erzielt werden.

Bevorzugt sind jedoch Ausgestaltungen, bei denen der Halteabschnitt ausschließlich aus wenigstens einem Längsprofil oder aus wenigstens zwei Längsprofilen ausgebildet ist, das/die jeweils nicht im Erdreich verankert ist/sind.

In Bezug auf die Verbindung zwischen Befestigungs- und Halteabschnitt kann ein Rücken-an-Rücken-Anliegen der beiden Abschnitte besonders einfach dann ausgestaltet werden, wenn sowohl der Halte- als auch der Befestigungsabschnitt mittels eines C-Profils ausgestaltet sind. In diesem Fall zeigen die jeweiligen Öffnungen der beiden C-Profile, die Rücken an Rücken aneinander anliegen, somit in entgegengesetzte Richtungen.

Eine vergleichbar gute Lösung kann aber auch durch ein flächiges Anliegen Rücken-an-Bauch erzielt werden. So können beispielsweise zwei C-Profile von unterschiedlicher Breite in Längsrichtung ineinander geschoben werden, sodass dann der Rücken des kleineren (inneren) C-Profils am Bauch des größeren (äußeren) C-Profils flächig aufliegt. Weist in diesem Fall das innere C-Profil eine kleinere Breite in der y-Richtung quer zur xz-Modulebene auf, so kann immer noch (ähnlich wie beim Rücken-an-Rücken-Anliegen) eine vorteilhafte/gewünschte Verdrehbarkeit der beiden Profile gegeneinander um einige wenige Grad in der yz-Ebene erzielt werden, zusätzlich zu der ohnehin möglichen Längsverstellbarkeit in der Längsrichtung des Pfostens. Dadurch kann ein zusätzlicher Freiheitsgrad in der Verstellung gewonnen werden, um üblicherweise bei Aufstellung im Gelände auftretende Schiefstellungen der Befestigungsabschnitte, die im Erdreich verankert werden, ausgleichen zu können.

Unter Verjüngung des Querschnitts kann hier im Allgemeinen jegliche geeignete Änderung des Querschnitts verstanden werden, die zu einer Materialersparnis aber auch zu einer Änderung des lokalen Flächenträgheitsmoments führt. Eine Querschnittsverjüngung kann dabei auch durch eine Verkürzung einer Querschnittslänge (in der Querschnittsebene) erreicht sein, ohne dass sich eine Einhüllende, innerhalb derer der Querschnitt des verwendeten Längsprofils liegt, ändert, wie noch anhand der Figuren klarer werden wird.

Eine erfindungsgemäße Verjüngung des jeweiligen Pfostens bzw. seines oberen Halteabschnitts kann insbesondere so ausgestaltet sein, dass der Pfosten / der obere Halteabschnitt nach oben hin konisch zuläuft. Dabei kann das Flächenträgheitsmoment beispielsweise kontinuierlich oder stufenweise nach oben hin (also mit zunehmendem Abstand zum Erdreich / mit zunehmender Höhe über dem Boden) abnehmen.

Die Pfosten einer erfindungsgemäßen Tragkonstruktion können in zueinander beabstandeten jeweiligen Reihen aufgestellt sein, sodass zwischen zwei Reihen an Pfosten ein jeweiliger Freiraum/Bewirtschaftungsraum besteht, der zum Beispiel landwirtschaftlich genutzt werden kann. Dies stellt einen wesentlichen Vorteil von bifazialer gegenüber monofazialer PV dar.

Einzelne der Riegel können somit am jeweiligen Halteabschnitt des jeweiligen Pfostens, insbesondere an Halteflächen, die der jeweilige Pfosten bereitstellt, montiert werden/sein.

Jeweils zwei benachbarte der Pfosten und zwei Riegel, die diese beiden Pfosten miteinander verbinden, können hierbei ein im Wesentlichen rechteckiges Montagefeld definieren, in dem wenigstens eines der PV-Module angeordnet ist.

Darüber hinaus kann die Tragkonstruktion so ausgestaltet sein, dass ein, zwei oder sogar drei übereinander angeordnete Montagefelder ausgebildet sind, in denen jeweils wenigstens ein PV-Modul angeordnet ist. Mit anderen Worten kann die Tragkonstruktion somit zwei oder sogar drei übereinander liegende jeweilige Reihen aus Montagefeldern ausbilden, in denen jeweilige PV-Module angeordnet werden können. Dadurch entstehen in der PV-Anlage somit übereinander angeordnete Reihen aus PV-Modulen.

Die für die Halteabschnitte verwendeten Längsprofile können insbesondere mit Rollformverfahren hergestellt sein. Beispielsweise mittels eines Rohr-Lasers lassen sich solche Profile derart trennen und aufteilen, dass die gewünschten Verjüngungen im Querschnitt ausgebildet werden können.

Weitere mögliche Ausgestaltungen sind in den Unteransprüchen definiert und werden im Folgenden im Detail erläutert:
Eine Möglichkeit, einen erfindungsgemäßen Pfosten mit Querschnittsverjüngung auszubilden besteht darin, den Halteabschnitt des Pfostens einteilig mittels eines einzigen Längsprofils auszugestalten und die Querschnittsverjüngung mittels einer axialen Variation eines Querschnitts des Längsprofils in Längsrichtung des Längsprofils zu erzielen. Beispielsweise kann der Querschnitt, insbesondere eine Querschnittsfläche oder Querschnittslänge des Längsprofils, in Längsrichtung des Halteabschnitts nach oben hin schrittweise oder kontinuierlich abnehmen.

Eine hierzu alternative Ausgestaltung (bei der ebenfalls axial variierende Querschnitte des jeweiligen Längsprofils eingesetzt werden können, wie gerade erläutert) sieht vor, dass die Halteabschnitte der Pfosten (die insbesondere oberhalb eines oder überlappend mit einem separaten Befestigungsabschnitt des Pfostens angeordnet sein können) jeweils mindestens zweiteilig mittels wenigstens zweier Längsprofile, insbesondere mittels eines ersten (insbesondere inneren) Längsprofils und mittels eines zweiten (insbesondere äußeren) Längsprofils, ausgestaltet sind, die sich teilweise oder aber vollständig überlappen. Wird zudem noch ein separater Befestigungsabschnitt des Pfostens ausgestaltet, so umfasst der Pfosten demnach mindestens bereits drei Teile: Den Befestigungsabschnitt und den hieran befestigten mindestens zweiteiligen Halteabschnitt, insbesondere mit innerem und äußerem Längsprofil. Im Bereich der Überlappung verstärken sich somit die Profile gegenseitig. Dies gilt auch dann, wenn die Profile des Halteabschnitts Rücken an Rücken aneinander anliegen, also gerade nicht ineinander gesteckt sind.

Um die verfügbare Fläche für die PV-Module zu maximieren ist es aber bevorzugt, wenn diese wenigstens zwei Längsprofile des Halteabschnitts ineinander gesteckt sind. Bevorzugt sind alle Längsprofile des Halteabschnitts (mindestens wechselsweise, also je zwei der Profile) ineinander gesteckt/ geschoben. Ferner ist es bevorzugt, wenn wenigstens zwei ineinander gesteckte Längsprofile des Halteabschnitts Querschnittsverläufe zeigen, die, bezogen auf eine jeweilige Querschnittsebene, einander entlang wenigstens 30%, vorzugsweise entlang wenigstens 50%, einer gesamten Querschnittslänge so folgen, dass die Längsprofile in einem axialen Überlappungsabschnitt flächig aneinander anliegen (in den Bereichen des Querschnitts, wo die Querschnittsverläufe einander folgen). Denn dadurch kann eine gute flächige Ableitung/Übertragung von Kräften von einem auf das jeweils andere Profil gewährleistet werden.

Durch das Ineinanderstecken können mindestens abschnittsweise / teilweise Überlappungen zwischen den einzelnen Profilen ausgestaltet werden. Ein solches Ineinanderstecken verringert zudem die Breite der Pfosten in Richtung der Modulebene, was günstig für einen hohen Füllfaktor ist. In diesem Fall kann der wenigstens zweiteilige Halteabschnitt somit ein inneres Längsprofil und ein äußeres Längsprofil umfassen, die ineinander gesteckt sind und sich mindestens teilweise (also insbesondere vollständig) überlappen. Vorzugsweise stützt sich dabei das innere Längsprofil an wenigstens zwei quer zueinander verlaufenden Innenflächen des äußeren Längsprofils auf dem äußeren Längsprofil ab. Dabei kann das innere Längsprofil das äußere verstärken und umgekehrt. Dasjenige Längsprofil, welches die Verstärkung im unteren Bereich des Halteabschnitts bereitstellen soll, kann somit auf das andere Längsprofil außenseitig aufgestülpt oder in dieses innenseitig eingeschoben sein.

Bei vollständiger Überlappung und gleicher Länge (in Längsrichtung) von zwei Profilen des Halteabschnitts kann eine erfindungsgemäße Querschnittsverjüngung dadurch ausgebildet werden, dass wenigstens eines (oder aber beide) dieser beiden gleich oder annähernd gleich langen Profile einen Querschnitt zeigt, der in axialer Richtung nach oben hin abnimmt.

Aber auch dann, wenn jedes der für den Halteabschnitt verwendeten Längsprofile jeweils einen in axialer Richtung konstanten Querschnittsverlauf zeigt, können erfindungsgemäße Querschnittsverjüngungen ausgebildet werden, wie die folgenden Ausgestaltungsbeispiele zeigen, weil dort die Längsprofile nur abschnittsweise überlappend und/oder mit unterschiedlicher Länge ausgestaltet werden können:
Bei einer Ausgestaltung kann eines der wenigstens zwei Längsprofile des Halteabschnitts, insbesondere das erwähnte innere oder aber das äußere Längsprofil, ein oberstes Längsprofil sein, welches einen jeweils am höchsten angeordneten Riegel (oberster Riegel) oder ein PV-Modul (insbesondere ein oberstes PV-Modul) trägt (welcher Riegel/welches Modul dann ausschließlich vom obersten Längsprofil gehalten ist). In diesem Fall kann ein anderes Längsprofil des Halteabschnitts (insbesondere ein äußeres oder aber ein inneres) ein unteres Längsprofil sein, welches einen jeweils am tiefsten angeordneten Riegel (unterster Riegel) oder PV-Modul (unterstes PV-Modul) trägt (diese Modul/dieser Riegel kann von beiden Längsprofilen getragen sein).

Wird der Halteabschnitt beispielsweise mittels drei oder vier, insbesondere ineinander gesteckter, vorzugsweise (wechselweise oder vollständig) miteinander verbundener (insbesondere miteinander verschraubter), Längsprofile realisiert, so kann zwischen dem besagten inneren Längsprofil und dem äußeren Längsprofil wenigstens ein mittleres Längsprofil angeordnet sein; dieses wenigstens eine mittlere Längsprofil kann dabei die jeweilige Verbindung zu den anderen Längsprofilen des Halteabschnitts herstellen. In diesem Fall muss das innere Längsprofil also nicht unmittelbar am äußeren Längsprofil anliegen, wie dies bei einer zweiteiligen Ausgestaltung möglich und sinnvoll ist. Es sind aber auch Ausgestaltungen des Halteabschnitts mit drei Längsprofilen, darunter ein inneres und ein äußeres Längsprofil möglich, bei denen das innere Längsprofil direkt am äußeren Längsprofil anliegt. In diesem Fall kann das dritte Längsprofil beispielsweise nur am inneren oder nur am äußeren Längsprofil (insbesondere Rücken an Rücken) anliegen.

Eine mögliche dreiteilige Ausgestaltung des Halteabschnitts sieht vor, dass ein äußeres Längsprofil flächig an einem mittleren Längsprofil anliegt, welches seinerseits flächig an dem inneren (bzw. innersten) Längsprofil anliegt. Auf diese Weise lässt sich auch bei gleichbleibendem Querschnitt des jeweiligen Längsprofils eine stufenweise Abnahme des Gesamtquerschnitts des Halteabschnitts und damit eine erfindungsgemäße Querschnittsverjüngung, insbesondere in zwei Stufen, ausbilden.

Besonders vorteilhaft für eine hohe mechanische Stabilität des Halteabschnitts ist es, wenn das innere Längsprofil mit einer Stirnfläche an einer Innenseite eines mittleren Längsprofils oder des äußeren Längsprofils (im Überlappungsbereich) flächig anliegt.

Generell können somit die wenigstens zwei Längsprofile des Halteabschnitts (insbesondere jeweils) im Bereich einer (jeweiligen) Überlappung flächig aneinander anliegen. Hierbei sind zwischen den Profilen jeweils ein Rücken-an-Bauch Anliegen ebenso ausgestaltbar wie ein Rücken-an-Rücken Anliegen.

Bevorzugt sind Ausgestaltungen, bei denen die Längsprofile des Halteabschnitts jeweils so aneinander anliegen, dass sie (wechselweise) relativ zueinander in Längsrichtung des Pfostens (z-Richtung) verschiebbar sind (jedenfalls, bevor die Profile miteinander verschraubt sind). Denn so kann eine Höhe des Pfostens aber auch sein axialer Querschnittsverlauf einfach angepasst werden.

Ferner ist es für eine hohe Stabilität der Konstruktion vorzuziehen, wenn zwischen wenigstens zwei Längsprofilen des Halteabschnitts (insbesondere zwischen innerem und äußerem Längsprofil bei zweiteiliger Ausgestaltung) ein Formschluss ausgebildet ist, der eine Relativbewegung der beiden Längsprofile gegeneinander in einer y-Richtung normal zur Modulebene verhindert. Besonders bevorzugt ist dabei zwischen diesen beiden Längsprofilen zusätzlich ein weiterer Formschluss ausgebildet, der auch eine Relativbewegung der beiden Längsprofile gegeneinander in einer x-Richtung in der xz-Modulebene und senkrecht zur z-Längsrichtung des Pfostens verhindert.

Für eine hohe Festigkeit des Pfostens ist es ferner vorteilhaft, wenn wenigstens zwei (vorzugsweise alle) der Längsprofile des Halteabschnitts an einem unteren separaten Befestigungsabschnitt des jeweiligen Pfostens, der die Verbindung zum Erdreich herstellt, befestigt sind.

Mit Blick auf eine kostengünstige Fertigung der Pfosten ist es ferner vorteilhaft, wenn wenigstens zwei, vorzugsweise alle, Längsprofile des Halteabschnitts jeweils mit einem halboffenen Querschnitt, insbesondere jeweils mit einem C-förmigen Querschnitt, ausgebildet sind. Denn dies ermöglicht eine Fertigung mittels Umformung, vorzugsweise mittels Rollumformen, ohne dass die so geformten Bleche mittels Verschweißung zusammengefügt werden müssen, wie dies bei geschlossen umlaufenden (beispielsweise rechteckigen) Querschnitten von Längsprofilen der Fall ist.

Gemäß einer besonders kostengünstigen Ausgestaltung weisen alle Längsprofile des Halteabschnitts jeweils einen konstanten Querschnitt auf (sodass jedes Profil für sich genommen keine Querschnittsverjüngung ausbildet). Ab derjenigen Stelle, an der die Überlappung zwischen zwei der Längsprofile des Halteabschnitts endet, verjüngt sich in diesem Fall der Gesamt-Querschnitt des Halteabschnitts sprungartig, wodurch die von der Erfindung angestrebte Querschnittsverjüngung bzw. Veränderung des Flächenträgheitsmoments erzielt wird.

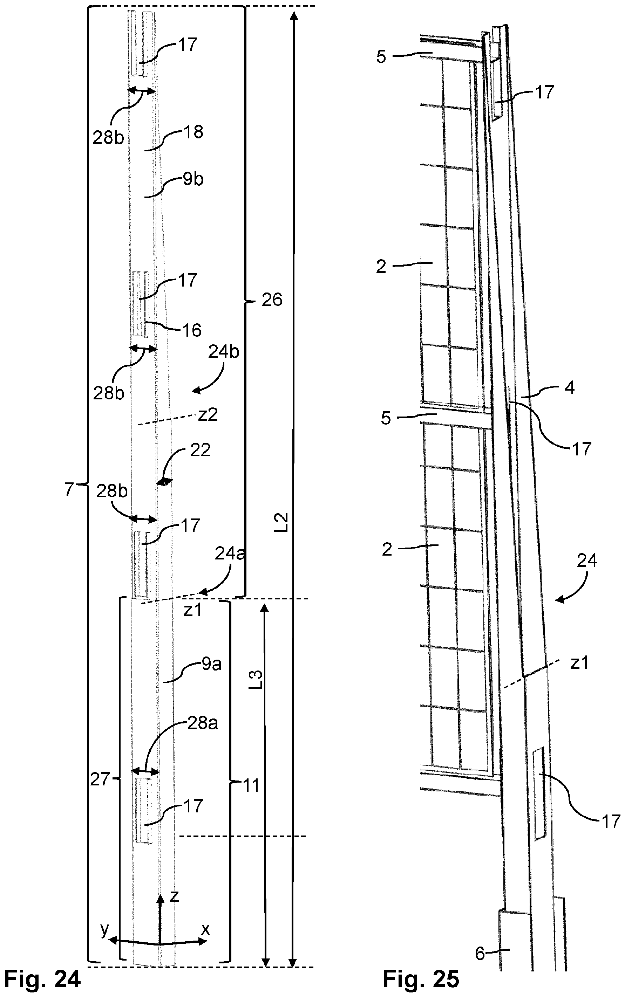

Insbesondere ein oberes Längsprofil oder auch ein mittleres Längsprofil des Halteabschnitts kann auch zusätzlich noch eine Querschnittsverjüngung aufgrund eines variablen Querschnitts aufweisen, sodass sich dort dann der Querschnitt des Halteabschnitts weiter verjüngt (Vgl. etwa Fig. 24). Ein unteres Längsprofil kann bei solchen Ausgestaltungen weiterhin mit in Längsrichtung konstantem Querschnitt ausgebildet sein.

Bei wie zuvor beschriebenen mehrteiligen Ausgestaltungen des Halteabschnitts (mit ggf. unterschiedlicher Länge der Längsprofile) kann demnach ein oberer Teil des Halteabschnitts ausschließlich durch ein oberstes Längsprofil des Pfostens gebildet sein. In diesem Fall steht also das oberste Längsprofil (dies kann ein inneres oder ein äußeres Längsprofil sein) über ein unteres Längsprofil des Halteabschnitts nach oben hin über. Der untere Teil des Halteabschnitts kann hingegen, zumindest abschnittsweise, durch beide dieser Profile, also sowohl durch das oberste Längsprofil als auch durch das untere Längsprofil, gebildet sein, nämlich in demjenigen Bereich, in welchem beide Längsprofile überlappen. Dieser Überlappungsbereich kann sich demnach entweder über einen gesamten unteren Teil des Halteabschnitts erstrecken (in diesem Fall überlappt das untere Längsprofil vollständig mit dem oberen Längsprofil) oder beispielsweise nur in einem mittleren Teil des Halteabschnitts ausgestaltet sein (in letzterem Fall ist dann ein unterster Teil des Halteabschnitts ausschließlich durch das untere Längsprofil gebildet). In allen diesen Fällen wird im unteren Teil des Halteabschnitts, insbesondere in einem mittleren Teil des Halteabschnitts, das untere (in der Regel kürzere) Längsprofil eingesetzt, um das oberste Längsprofil, welches (dann typischerweise aber nicht zwingend länger als das untere Längsprofil sein kann) zu verstärken, um so lokal das Flächenträgheitsmoment und damit die mechanische Festigkeit des Pfostens zu erhöhen.

Mit diesem erfindungsgemäßen Ansatz für einen mehrteiligen Halteabschnitt kann auch bei Verwendung von Längsprofilen mit geringer Wandstärke eine ausreichend hohe mechanische Festigkeit, insbesondere ein ausreichend hohes Flächenträgheitsmoment, im kritischen unteren Bereich des Halteabschnitts erzielt werden, aber gleichzeitig kann Material eingespart werden im Vergleich zur Verwendung von Profilen mit größerer Wandstärke. Der Pfosten kann so auch hohen Windlasten noch widerstehen und es kann ein Abknicken der Pfosten verhindert werden. Wie noch gezeigt werden wird, kann ferner das Ausmaß der Querschnittsverjüngung von Pfosten zu Pfosten variiert werden, was eine weitere Optimierung der Tragkonstruktion, insbesondere des Materialeinsatzes, ermöglicht.

Durch unterschiedliche Ausgestaltung, insbesondere unterschiedliche Länge, von zwei Längsprofilen kann somit bereits eine erfindungsgemäße Querschnittsverjüngung bzw. die gewünschte Zunahme des mechanischen Flächenträgheitsmoments des Halteabschnitts erreicht werden, wenn die Längsprofile selbst keine Querschnittsverjüngung bzw. einen sich ändernden Querschnitt aufweisen. Dies kann besonders einfach durch die zuvor beschriebene Ausgestaltung erreicht werden, bei der der obere Teil des Halteabschnitts nur durch eines der beiden Profile gebildet ist. Aber auch dann, wenn zwei Längsprofile zur Ausbildung des Halteabschnitts eingesetzt werden, kann wenigstens eines dieser Längsprofile, vorzugsweise das oberste Längsprofil, selbst eine erfindungsgemäße Verjüngung ausbilden (z.B., weil der Querschnitt dieses Längsprofils nach oben hin abnimmt) .

Werden beispielsweise zwei C-Profile für den Halteabschnitt verwendet, die ineinandergesteckt sind, so ist es vorteilhaft, wenn diese Rücken-auf-Bauch anliegen. Denn in diesem Fall kann das untere C-Profil Rücken-an-Rücken an einem unteren Befestigungsabschnitt des Pfostens, der ebenfalls als C-Profil ausgestaltet sein kann, anliegen.

Es sind ferner Ausgestaltungen von zweiteiligen Halteabschnitten bevorzugt, bei denen das obere Längsprofil über eine gesamte Länge des unteren Längsprofils verläuft und somit über die gesamte Länge des unteren Längsprofils dieses strukturell verstärkt. Dies bietet sich insbesondere dann an, wenn beide Längsprofile des zweiteiligen Halteabschnitts als (halb-)offene Profile ausgestaltet sind. Hierbei kann das untere Längsprofil an einzelnen Stellen über Verstärkungen (Brücken) so überbrückt sein, dass lokal ein geschlossener Kraftschluss erzielt wird, ähnlich wie bei einem geschlossenen Profil. Gleiches gilt auch für die Befestigungsabschnitte der Pfosten, die auf ähnliche Weise gezielt durch solche Brücken gestärkt werden können.

Auch mit einer solchen zweiteiligen Ausgestaltung des jeweiligen Halteabschnitts lässt sich eine erfindungsgemäße Querschnittsverjüngung im Bereich des Halteabschnitts des Pfostens ausbilden. Denn im unteren Teil des Halteabschnitts verstärkt das untere Längsprofil den lokalen Querschnitt, während im oberen Teil des Halteabschnitts der jeweilige Querschnitt nur durch das oberste Längsprofil ausgestaltet ist. Besonders vorteilhaft ist es dabei, wenn das oberste Längsprofil einen kleineren Querschnitt aufweist als das untere Längsprofil und/oder wenn eine Länge des obersten Längsprofil größer als eine Länge des unteren Längsprofils gewählt ist, sodass das oberste Längsprofil das untere Längsprofil nach oben hin überragt, oder wenn das oberste Längsprofil ein inneres Längsprofil ausbildet. Hierbei kann insbesondere vorgesehen sein, dass ein jeweiliger oberster Riegel oder zwei jeweilige oberste Riegel (die übereinander angeordnet sind und), der/die eine oberste Reihe an PV-Modulen halten, oder ein jeweiliges oberstes PV-Modul (vermittelt über eine Verbindungselement) ausschließlich an dem obersten Längsprofil montiert ist/sind.

Eine besonders effiziente Ausgestaltung sieht vor, dass beide Längsprofile des Halteabschnitts als C-Profile ausgestaltet und ineinander gesteckt sind. Bevorzugt ist dabei das oberste Längsprofil im Innern des unteren Längsprofil angeordnet (Die C-Profile werden somit ineinander geschoben, wobei das C-Profil des obersten Längsprofil dann kleiner als das C-Profil des unteren Längsprofils ausgestaltet ist).

Das untere Längsprofil des Halteabschnitts kann bevorzugt ein größeres Flächenträgheitsmoment bereitstellen als das obere (bzw. oberste) Längsprofil. Dadurch kann erreicht sein, dass das vom zweiteiligen Halteabschnitt insgesamt bereitgestellte Gesamt-Flächenträgheitsmoment in der Längsrichtung des Pfostens, wie gewünscht, nach unten hin zunimmt.

Ferner können vorzugsweise beide Längsprofile eines zweiteiligen Halteabschnitts, zumindest teilweise und/oder vollständig, mit halboffenem Querschnitt ausgebildet sein.

Wie noch genauer mit Bezug auf das erfindungsgemäße Fertigungsverfahren erläutert werden wird, kann eine Verjüngung eines Längsprofils des Halteabschnitts durch einen Unterteilungstrennschnitt erzielt sein. Mit anderen Worten kann also ein ursprüngliches Längsprofil mithilfe des Unterteilungstrennschnitt so aufgeteilt worden sein, dass die gewünschte erfindungsgemäße Verjüngung in dem hieraus erhaltenen Längsprofil ausgebildet wird. Die jeweiligen Längsprofile, die den jeweiligen Halteabschnitt ausbilden, können somit durch Auftrennen eines jeweiligen ursprünglichen Längsprofils (z.B. mit geschlossen umlaufenden Profilquerschnitt) in zwei Längsprofile (die dann einen teilweise/abschnittsweise halboffenen Profilquerschnitt aufweisen können) mittels wenigstens eines Unterteilungstrennschnitts hergestellt sein/werden, was noch genauer im Zusammenhang mit dem erfindungsgemäßen Fertigungsverfahren erläutert werden wird.

Ein hierzu alternativer Ansatz besteht darin, das jeweilige Längsprofil mit der erfindungsgemäßen Verjüngung aus einem Rohmaterial durch Umformung herzustellen. Auch bei diesem Ansatz kann aber mithilfe eines Unterteilungstrennschnitts das Rohmaterial so bearbeitet werden, dass die gewünschte Verjüngung entsteht.

Gemäß einer Ausgestaltung kann eine jeweilige x-Breite und/oder eine jeweilige y-Breite des jeweiligen Halteabschnitts (also insbesondere eines Längsprofils des Halteabschnitts - dies kann sowohl das zuvor erwähnte untere Längsprofil, das oberste Längsprofil oder aber ein einzelnes Längsprofil sein, welches den gesamten Halteabschnitt ausbildet) über wenigstens 30%, vorzugsweise über wenigstens 40%, der Gesamtlänge des Halteabschnitts verringert ist im Vergleich zu einer jeweiligen maximalen x-Breite/maximalen y-Breite des Halteabschnitts (bzw. des jeweiligen Längsprofils). Um eine nennenswerte Materialersparnis zu erhalten kann die Verringerung dabei mindestens 10%, mindestens 20 %, oder sogar mindestens 30 % betragen.

Bei einer weiteren Ausgestaltung ist vorgesehen, dass sich eine jeweilige x-Breite von Seitenflächen eines Längsprofils des jeweiligen Halteabschnitts in der Längsrichtung nach oben hin, vorzugweise kontinuierlich, verringert. Die Seitenflächen können dabei in etwa in der Modulebene orientiert sein, die durch die PV-Module gebildet wird. Hierbei kann insbesondere vorgesehen sein, dass in einer jeweiligen an die Seitenflächen angrenzenden Stirnfläche des jeweiligen Halteabschnitts jeweilige Durchstecköffnungen im jeweiligen Längsprofil ausgebildet sind und dass in die jeweilige Durchstecköffnung ein zugehöriger Riegel mehr oder weniger tief eingesteckt ist. Bei solchen Ausgestaltungen ist es ferner bevorzugt, wenn eine y-Breite der Stirnfläche an wenigstens zwei solcher Durchstecköffnungen (innerhalb eines Halteabschnitts) gleich groß ausgestaltet ist.

Bei einer erfindungsgemäßen Tragkonstruktion kann auch vorgesehen sein, dass eine y-Breite des Halteabschnitt im Bereich eines obersten Riegels oder eines obersten PV-Moduls wenigstens 10 %, oder sogar wenigstens 20 %, kleiner gewählt ist als im Bereich eines untersten Riegels / untersten PV-Moduls. Gleiches gilt auch für die jeweilige x-Breite des jeweiligen Halteabschnitts, wobei auch Ausgestaltungen möglich sind, bei denen sowohl die x-Breite als auch die y-Breite im Bereich des obersten Riegels um die besagten Verhältnisse kleiner gewählt ist als im Bereich des untersten Riegels. Solche Ausgestaltungen sind insbesondere möglich, wenn der Halteabschnitt mehrteilig aus wenigstens zwei Längsprofilen aufgebaut ist, beispielsweise mit einem unteren Längsprofil und einem obersten Längsprofil, welches dann in der x- und/oder in der y-Breite entsprechend schmaler als das untere Längsprofil ausgestaltet ist.

Die Längsprofile, die jeweils Halteabschnitte eines jeweiligen Pfostens ausbilden, können insbesondere (plane) Halteflächen zum Halten von Riegeln der Tragkonstruktion bereitstellen. Solche Halteflächen können zum Beispiel als Flansche des jeweiligen Längsprofils, bevorzugt (aber nicht zwingend) über die gesamte Länge des Längsprofils, oder als Laschen an Durchstecköffnungen ausgebildet sein, wobei auch Kombinationen solcher Ausgestaltungen möglich sind. Werden mehrere Längsprofile zur Ausbildung eines Halteabschnitts eingesetzt, so kann die jeweilige (linke oder rechte) Lasche jeweils als Laschenpaar ausgestaltet sein, wobei je zwei Längsprofile des Halteabschnitts eine Lasche des Laschenpaars beisteuern. Eine Verschraubung mit dem Riegel kann dann durch beide Laschen des Laschenpaars geführt sein, wodurch die beiden Längsprofile des Halteabschnitts an der Stelle des Laschenpaars miteinander mechanisch verbunden werden, was die Stabilität erhöht.

Bei Verwendung von Halteflächen ist es bevorzugt, wenn diese in Bezug auf eine Richtung senkrecht zu einer Modulebene der PV-Module (in welcher Modulebene die aktiven Flächen der PV-Module angeordnet sind) nach innen auf die Modulebene hin versetzt sind. Dadurch kann nämlich insbesondere erreicht werden, dass die Riegel in der besagten y-Richtung, in welcher die Halteflächen nach innen hin (in Bezug auf für die Verschattung relevanten Außenkanten der Pfosten) versetzt sind, wenigstens 20 % schmaler ausfallen als die Pfosten. Ausgestaltungen der Tragkonstruktion bei denen die Riegel (wesentlich, z.B. mindestens 20% oder sogar mindestens 30%) schmaler als die Pfosten (in der y-Richtung) ausgestaltet sind, sind günstig, um die Verschattung der PV-Module durch die Riegel zu minimieren. Es ist ferner für eine verminderte Verschattung der PV-Module generell zu bevorzugen, wenn die PV-Module aber auch die Riegel mittig zu den Pfosten platziert sind. An solchen Halteflächen kann ein jeweiliger Riegel somit flächig befestigt werden, beispielsweise durch flächiges Anliegen und/oder mittels einer Verschraubung des Riegels mit der Haltefläche.

Die obersten der erläuterten Durchstecköffnungen können dabei nach oben hin offen ausgestaltet sein, sodass Riegel von oben in diese obersten Durchstecköffnung jeweils eingelegt werden können.

Wird der untere Bereich des Halteabschnitts mit geschlossenem Querschnitt ausgebildet, so können in der jeweiligen vorderseitigen als auch in der rückseitigen Stirnfläche zueinander korrespondierende (also insbesondere zueinander fluchtende) Durchstecköffnungen im Pfosten ausgestaltet sein, damit der Riegel, ggf. über die gesamte Breite des Pfostens hinweg, tief in den Pfosten eingesteckt werden kann. Eine solche Möglichkeit ist generell zu bevorzugen, weil dadurch Schiefstände der Pfosten ausgeglichen werden können. Bei halboffener Querschnittsform der Längsprofile kann es genügen, die Durchstecköffnungen nur auf einer Seite auszugestalten.

Bei Ausbildung von Halteflächen als Laschen kann die Form der Lasche durch die Form der Durchstecköffnung vorgegeben sein, nämlich insbesondere dann, wenn die Lasche einstückig aus dem Längsprofil des Pfosten durch Schneiden und Aufbiegen gewonnen wurde (also die Lasche gerade nicht angeschweißt ist, was eine mögliche alternative Ausgestaltung wäre, die jedoch kostenintensiver ist).

Alternativ oder ergänzend zur Verwendung von Halteflächen ist es auch möglich, die Riegel mithilfe von separaten Adapterelementen an den Pfosten zu befestigen. In diesem Fall können also weiterhin Durchstecköffnungen ausgebildet werden, aber das ist nicht zwingend erforderlich. Auch über solche Adapterelemente können Querkräfte von den Riegeln effizient in die Pfosten abgeleitet werden.

Eine weitere Ausgestaltung sieht vor, dass die jeweiligen Halteabschnitte bzw. die jeweiligen Längsprofile, die den jeweiligen Halteabschnitt ausbilden, in einem unteren Teil mittels eines geschlossen umlaufenden unteren Profilquerschnitts und in einem oberen Teil mittels eines halbseitig offenen oberen Profilquerschnitts ausgebildet sind. Bei Verwendung von zwei Längsprofilen für den Halteabschnitt kann beispielsweise ein halbseitig offenes C-Profil (als oberstes Profil) mit einem weiteren Längsprofil mit geschlossenem Querschnitt (als unterem Profil) verwendet werden, um einen erfindungsgemäßen Halteabschnitt mit Verjüngung auszubilden. Der halboffene obere Profilquerschnitt kann insbesondere infolge eines Auftrennens eines Längsprofils mit ursprünglich geschlossenem Profilquerschnitt ausgebildet worden sein oder infolge eines Unterteilungstrennschnitts durch ein Rohmaterial, aus welchem das Längsprofil durch Umformung hergestellt wurde.

Es kann auch vorgesehen sein, dass eine das lokale Flächenträgheitsmoment des Pfostens bestimmende Querschnittslänge eines oberen Profilquerschnitts (insbesondere des zuvor erläuterten) in einem oberen Teil des jeweiligen Halteabschnitts beziehungsweise des jeweiligen Längsprofils in der Längsrichtung nach oben hin, vorzugsweise kontinuierlich, abnimmt. Dieser obere Teil des Halteabschnitts, in welchem die Querschnittslänge abnimmt, kann bevorzugt mindestens 30% oder sogar mindestens 40% der Gesamtlänge des Halteabschnitts ausmachen.

Eine besonders hohe Materialersparnis kann auch dadurch erreicht sein, dass wenigstens 70 %, insbesondere wenigstens 85 % oder sogar eine Gesamtheit einer Länge des jeweiligen Halteabschnitts bzw. des jeweiligen Längsprofil im Querschnitt halb offen ausgestaltet ist. Zur Bereitstellung solcher halb offener Halteabschnitte kann beispielsweise ein kastenförmiges ursprüngliches Längsprofil mithilfe eines Trennverfahrens in zwei halb offene C-Profile, die dann komplementär zueinander sind, aufgetrennt werden. Hierbei kann die Trennlinie dann schräg zur Längsachse des Längsprofils verlaufen. Komplementär kann hier insbesondere so verstanden werden, dass die Trennlinie sowohl den ersten aus dem Längsprofil erhaltenen Halteabschnitt als auch den hierzu komplementären zweiten Halteabschnitt definiert.

Bei solchen Ausgestaltungen ist es dann aber bevorzugt, wenn wenigstens ein weiterer Abschnitt des jeweiligen Pfostens im Querschnitt geschlossen ausgestaltet ist. Dieser weitere Abschnitt kann beispielsweise ein im Erdreich verankerter Befestigungsabschnitt des Pfostens sein oder aber ein weiteres Längsprofil, welches den Halteabschnitt mit ausbildet.

Wird der untere Bereich des Halteabschnitts als geschlossenes Profil, beispielsweise als im Querschnitt geschlossenes Rechteck-/Kastenprofil ausgestaltet, so muss pro Länge des zu erzielenden Halteabschnitts mehr Material bzw. eine größere Länge eines ursprünglichen Längsprofils bei der Herstellung eingesetzt werden, weil dieser untere geschlossene Teil des Halteabschnitts nur in einem von zwei durch Auftrennen des ursprünglichen Längsprofils herzustellenden Halteabschnitten, nicht aber in beiden, eingesetzt werden kann. Das erfindungsgemäße Konzept eines sich nach oben verjüngenden (z.B. zur Spitze hin konisch zulaufenden) Halteabschnitts eines Pfostens einer Tragkonstruktion einer PV-Anlage lässt sich aber nicht nur mittels der beschriebenen Auftrennung eines (in sich geschlossenen) Längsprofils in zwei komplementäre Halteabschnitte mittels eines Trennungsschnitts realisieren. Denkbar wäre ferner auch eine Herstellung, bei der die jeweiligen Halteabschnitte durch Aufbiegen/Falzen von zuvor zugeschnittenen flachen Blechen erhalten werden. Hierbei können die Bleche jeweils mit komplementärer Form mittels Trennverfahren aus einem größeren Blech ausgeschnitten werden. Hierbei werden die jeweiligen Unterteilungsschnitte so ausgeführt, dass nach dem Umformen der Bleche Querschnittsverläufe der so erhaltenen Längsprofile entstehen, die eine erfindungsgemäße Querschnittsverjüngung in Längsrichtung aufweisen.

Das erfindungsgemäße Konzept wird auch durch die Lösung beschrieben, wie sie in Anspruch 11 definiert ist. Danach ist zur Lösung der eingangs genannten Aufgabe bei einer wie eingangs erläuterten Tragkonstruktion vorgesehen, dass sich jeweilige mechanische Tragfähigkeiten der Halteabschnitte zwischen einzelnen der Pfosten zumindest teilweise unterscheiden, weil ein jeweiliges Ausmaß einer jeweiligen Querschnittsverjüngung (die wie zuvor erläutert erfindungsgemäß ausgestaltet sein kann) des jeweiligen Halteabschnitts zwischen einzelnen der Pfosten variiert.

Eine solche Variation der mechanischen Tragfähigkeit zwischen den einzelnen Posten kann insbesondere aus einem jeweils unterschiedlichen axialen Verlauf des jeweiligen Flächenträgheitsmoments des Halteabschnitts resultieren: Beispielsweise kann eine stufenförmige Querschnittsverjüngung in unterschiedlichen z-Höhen an den Halteabschnitten der Pfosten ausgestaltet sein. Je höher der Punkt, an dem sich der Querschnitt verjüngt, um so höher ist die mechanische Tragfähigkeit des Pfostens, insbesondere in Bezug auf Biegekräfte, die durch Windlasten auf die PV-Module erzeugt werden. Auf diese Weise kann auch ein mechanischer Schwachpunkt des oberen Halteabschnitts individuell nach oben verschoben werden und somit an einzelnen Pfosten eine Anpassung der Tragfähigkeit zu realisieren.

Darüber hinaus ist es möglich, die Höhe bzw. den axialen Verlauf des effektiven Querschnitts an jedem einzelnen Pfosten individuell einzustellen, in dem der Halteabschnitt des Pfostens aus wenigstens zwei sich axial überlappenden Profilen gebildet wird. Denn in diesem Fall kann die jeweilige axiale Überlappungslänge dieser den Halteabschnitt ausbildenden Längsprofile von Pfosten zu Pfosten variiert werden. Auch so können sehr einfach Pfosten von unterschiedlicher mechanischer Tragfähigkeit ausgestaltet werden, bei Verwendung identischer Profilquerschnitte der einzelnen Längsprofile.

Daher können auch alle jeweils zueinander korrespondierenden Längsprofile, die den jeweiligen Halteabschnitt oder gleichen Teil eines Halteabschnitts eines Pfostens der Tragkonstruktion ausbilden, eine (innerhalb von Fertigungstoleranzen) identische Querschnittsform aufweisen. Dies ist insbesondere dann der Fall, wenn sämtliche dieser Längsprofile aus einem gemeinsamen Rohmaterial, insbesondere einem bestimmten Längsprofil von in Längsrichtung konstantem Querschnitt, hergestellt wurden. Auch bei einer solchen Ausgestaltung kann aber das Ausmaß bzw. die axiale Höhe der Querschnittsverjüngung von Pfosten zu Pfosten variiert werden, etwa in dem zwei Längsprofile unterschiedlich tief ineinander eingesteckt werden oder in dem die beschriebenen Unterteilungstrennschnitte mit unterschiedlichem Verlauf und/oder in unterschiedlicher z-Höhe ausgeführt werden (was sich insbesondere bei Ausbildung des Halteabschnitt aus nur einem einzigen Längsprofil anbietet).

Durch diesen erfindungsgemäßen Ansatz kann somit ausgehend von einem immer gleichen Rohmaterial eine Tragkonstruktion erhalten werden, deren Pfosten je nach lokalem Aufstellungsort innerhalb derselben Tragkonstruktion, eine jeweils gewünschte an dieser Stelle erforderliche mechanische Tragfähigkeit aufweisen. Ferner können bei diesem Ansatz insbesondere gleiche Materialstärken und/oder Rohmaterialien für die einzelnen Längsprofile verwendet werden und dennoch können sich die jeweiligen mechanischen Eigenschaften der Halteabschnitte der Pfosten signifikant voneinander unterscheiden. Auf diese Weise lässt sich somit an gezielten Stellen innerhalb der Tragkonstruktion Material bei einzelnen der Pfosten einsparen, was die Herstellungskosten senkt. Mit diesem erfinderischen Ansatz lassen sich somit die mechanischen Eigenschaften der jeweiligen Pfosten innerhalb derselben Tragkonstruktion maßschneidern, sodass jeder Pfosten die mechanische Festigkeit bietet, die an seinem lokalen Standort innerhalb der Tragkonstruktion aufgrund der dort lokal herrschenden Windlast benötigt wird.

Eine solche Variation der jeweiligen Querschnittsverjüngung, insbesondere eine Variation ihres axialen Verlaufs entlang der Längsrichtung des jeweiligen Pfostens, kann insbesondere durch Anpassung der Querschnittsform des jeweiligen Längsprofils in axialer Richtung oder beispielsweise durch zweiteiligen Aufbau des Halteabschnitts aus zwei Profilen bei gleichzeitiger Variation einer axialen Überlappungslänge dieser beiden Profile erzielt werden. Bei der ersten Variante kann insbesondere ein Verlauf der jeweiligen Schnittlinie, die den zuvor erwähnten Unterteilungstrennschnitt definiert, angepasst sein, um die mechanische Tragfähigkeit der Pfosten innerhalb der Anlage zu variieren. Vorteilhaft ist dabei, dass die Pfosten weiterhin aus denselben Längsprofilen herstellbar sind, sodass die Anzahl an unterschiedlichen Längsprofilen begrenzt bleibt.

Zusätzlich kann aber auch die Material- bzw. Wandstärke des jeweiligen Längsprofils variiert werden, um so einen zusätzlichen Freiheitsgrad für die gezielte Anpassung der mechanischen Tragfähigkeit auszunutzen.

Auf diese Weise lassen sich zudem - aus gleichen Grundmaterialien an industriell gefertigten, insbesondere kalt gewalzten, Längsprofilen - unterschiedliche Tragkonstruktionen herstellen, die für PV-Anlagen an unterschiedlichen geographischen Standorten auf dem Globus mit unterschiedlichen Windlasten ausgelegt sind. So kann eine Serie an Tragkonstruktionen erhalten werden, die allesamt gleichartig aufgebaut sind und gleiche oder sehr ähnliche Längsprofile verwenden, sich aber signifikant in ihrer jeweiligen mechanischen Belastbarkeit unterscheiden. Dies wird durch jeweils sparsamen Materialeinsatz unter Anwendung der erfindungsgemäßen gezielten Verjüngung der Pfosten erzielt, wobei das Ausmaß der Verjüngung der Pfosten die Ersparnis an Material bestimmt und gleichzeitig ermöglicht, je nach geographischem und/oder lokalem Standort und dortiger Windlast die mechanische Belastbarkeit des jeweiligen Pfostens (oder der gesamten Tragkonstruktion) gezielt anzupassen.

Bei einer solchen erfindungsgemäßen Variation der Querschnittverjüngung zwischen unterschiedlichen Halteabschnitten / Pfosten kann ein stets gleicher Querschnitt in einem unteren Teil des Halteabschnitts ausgestaltet werden. So kann beispielsweise ein bestimmter Querschnitt Q1 am unteren Ende des jeweiligen Halteabschnitts stets gleich bleiben. Dieses Vorgehen kann die Verbindung des Halteabschnitts mit dem jeweiligen mit dem Erdreich verbundenen Befestigungsabschnitt erleichtern, weil in diesem Bereich dann gerade keine Variation auftritt.

Bei diesen Ansätzen kann also vom selben Rohmaterial bei der Herstellung der Pfosten ausgegangen werden und die gewünschte Anpassung der mechanischen Eigenschaften durch Variation eines Produktionsschritts, nämlich zum Beispiel der Lage des Unterteilungsschnitts, erzielt werden. Somit kann eine einfache Produktion beibehalten und gleichzeitig eine große Variation der mechanischen Eigenschaften der Pfosten erhalten werden.

Zur Lösung der eingangs genannten Aufgabe schlägt die Erfindung ferner eine PV-Anlage vor, die in Anspruch 12 beschrieben ist, und die auf einer erfindungsgemäßen Tragkonstruktion basiert. Die PV-Module können dabei an den Riegeln und/oder an den Pfosten der Tragkonstruktion, z.B. über separate Halteelemente oder geeignete Modulhalterungen, montiert sein.

Die Erfindung lässt sich auch mit einem Bausatz realisieren, der zahlreiche Längsprofile wie zuvor beschrieben umfassen kann. Zur Lösung der Aufgabe wird somit auch vorgeschlagen, dass einzelne oder mehrere Längsprofile, insbesondere wie zuvor beschrieben, ausgebildet und eingesetzt werden, um einen Halteabschnitt mit Querschnittsverjüngung als Teil eines Pfostens einer wie eingangs beschriebenen Tragkonstruktion auszugestalten, wie in Anspruch 13 beschrieben. Hierbei kann, wie erläutert, an wenigstens einem der Längsprofile, aus dem der Halteabschnitt besteht, eine erfindungsgemäß ausgestaltete Querschnittsverjüngung durch axiale Variation des Querschnitts (dieses Längsprofils) ausgestaltet sein und/oder es können wenigstens zwei der Längsprofile des Halteabschnitts so ineinander gesteckt sein, dass eine erfindungsgemäße Querschnittsverjüngung am Halteabschnitt ausgestaltet ist.

Bei diesem Bausatz kann auch vorgesehen sein, dass die Längsprofile durch jeweiliges Auftrennen eines ursprünglichen Längsprofils von identischem und/oder gleichbleibendem und/oder geschlossenem Querschnitt, insbesondere mittels eines erfindungsgemäßen Herstellungsverfahrens, erhalten wurden. Ferner können sich die Längsprofile in einem jeweiligen Verlauf ihres Flächenträgheitsmoments unterscheiden. Vorzugsweise können dabei alle Längsprofile eine identische Wandstärke aufweisen; dies ist aber nicht zwingend erforderlich. Die Formulierung "identische Wandstärke" ist hier technisch so zu verstehen, dass die Wandstärken der Längsprofile innerhalb von typischen Fertigungsschwankungen für eine für das ursprüngliche Längsprofil vorgegebene nominelle Wandstärke liegen können.

Die auf diese Weise ausgestalteten Längsprofile des Bausatzes können somit als jeweilige Halteabschnitte an unterschiedlichen Stellen der Tragkonstruktion eingesetzt werden, um jeweils eine lokal erforderliche mechanische Standfestigkeit des jeweiligen Pfostens sicherzustellen.

Im Folgenden soll das erfindungsgemäße Verfahren zur Herstellung von Pfosten einer Tragkonstruktion für eine PV-Anlage erläutert werden. Hierbei kann die Tragkonstruktion wie zuvor erläutert oder gemäß einem der auf eine Tragkonstruktion gerichteten Ansprüche ausgestaltet sein. Das Verfahren kennzeichnet sich gemäß einer ersten Variante A) dadurch, dass ein ursprüngliches Längsprofil (vorzugweise von gleichmäßigem/konstantem und oder geschlossenem Querschnitt) mittels eines Trennverfahrens in zwei komplementäre Teile aufgeteilt wird, sodass jedes der beiden Teile jeweils einen Halteabschnitt eines jeweiligen Pfostens ausbildet. Wie erläutert, dient der jeweilige Halteabschnitt dabei dem Halten von Riegeln der Tragkonstruktion, d.h. die Riegel werden später am jeweiligen Halteabschnitt montiert. Hierbei gibt ein Verlauf eines bei dem Trennverfahren eingesetzten Unterteilungstrennschnitts eine jeweilige Querschnittsverjüngung des jeweiligen Halteabschnitts vor und die jeweilige Querschnittsverjüngung erstreckt sich dabei jeweils über wenigstens 30%, vorzugsweise über wenigstens 40%, einer Gesamtlänge des jeweiligen Teils bzw. des jeweiligen Halteabschnitt.

Dieses Konzept des Vorgebens der Verjüngung mithilfe eines Unterteilungstrennschnitts lässt sich aber auch gemäß einer Verfahrensvariante B) derart anwenden, dass ein Blech mittels eines Trennverfahrens in mindestens zwei Blechteile aufgetrennt wird und dass aus den mindestens zwei Blechteilen durch Umformung zwei Halteabschnitte eines jeweiligen Pfostens gewonnen werden, und zwar derart, dass sich der jeweilige Halteabschnitt im Querschnitt zu einem jeweiligen Ende hin verjüngt. Auch bei dieser zweiten Variante B) bestimmt der bei dem Trennverfahren eingesetzte Unterteilungstrennschnitt die jeweilige Querschnittsverjüngung des jeweiligen Halteabschnitts und auch hier ist vorgesehen, dass sich die Querschnittsverjüngung jeweils über wenigstens 30% oder sogar über wenigstens 40% einer Gesamtlänge des jeweiligen Halteabschnitts erstreckt, damit eine relevante Materialersparnis erzielt wird.

Bei der ersten Variante kann das ursprüngliche Längsprofil somit mittels wenigstens eines Unterteilungstrennschnitts in die beiden Halteabschnitte aufgeteilt werden. Der jeweilige Pfosten kann dann aus dem Halteabschnitt und einem zusätzlichen Befestigungsabschnitt (beispielsweise in Form eine Rammprofils, welches zum Einrammen in das Erdreich ausgestaltet ist), zusammengesetzt werden.

Als Trennverfahren zum Auftrennen des ursprünglichen Längsprofils kann/können beispielsweise eingesetzt werden: Laserschneiden; Plasma-Schneiden; Wasserstrahlschneiden; Abscheren; Stanzen von Perforationen mit nachfolgendem Durchtrennen von Stegen, welche die Perforationen verbinden; oder sonstige Verfahren, die eine kostengünstige und massentaugliche Fertigung erlauben.

Das Umformen der Blechteile gemäß der Alternative B) kann beispielsweise durch Aufbiegen und/oder Falzen erfolgen.

Es versteht sich, dass der Ansatz A) (insbesondere das letzte Merkmal) nicht so einschränkend verstanden werden darf, dass die Aufspaltung des ursprünglichen Längsprofils in die beiden Abschnitte streng mittels nur eines einzigen Trennungsschnitts erfolgen muss. Vielmehr ist es beispielsweise möglich mehrere solcher Trennschnitte vorzunehmen, um das ursprüngliche Längsprofil in die beiden komplementären Abschnitte aufzuteilen. Hierbei können auch Abfallstücke entstehen, sodass die Komplementarität nicht streng ausfallen muss. Entscheidend ist aber, dass die beiden Abschnitte aus ein und demselben ursprünglichen Längsprofil (oder in Variante B) aus demselben Blech) durch Auftrennen desselbigen gewonnen werden. Wird beispielsweise ein zur Längsachse des ursprünglichen Längsprofils schräg verlaufender Trennschnitt vorgenommen, so können zwei Halteabschnitte eines Pfostens erhalten werden, die sich jeweils (in gegensätzlichen Richtungen) auf ein Ende hin verjüngen und damit jeweils einen in axialer Richtung veränderlichen Querschnitt zeigen.

Auch bei der zweiten Verfahrensvariante B) (Auftrennen in wenigstens zwei Blechteile) kann sich beispielsweise eine Breite des Pfostens, in Richtung der Modulebene (x-Richtung) und/oder quer hierzu (y-Richtung), nach oben hin verjüngen. Der Ansatz B), ausgehend von Blechen durch Umformung komplexe Profile zur Verwendung als jeweilige Halteabschnitte eines Pfostens zu erhalten, ist jedoch in der Herstellung wesentlich aufwendiger und erfordert spezielle Maschinen, die typischerweise weniger Flexibilität bieten als etwa der Einsatz eines Rohrlasers, mit dem zahlreiche Geometrien von Trennlinien realisierbar sind. Daher ist der Ansatz A) bevorzugt. Beide Ansätze gehen aber von der gemeinsamen erfinderischen Idee aus, aus einem Rohmaterial (Längsprofil / Blech) durch Separation komplementäre Bauteile zu erhalten, die jeweils als Halteabschnitt eines Pfostens eingesetzt werden können.

Bei der ersten erläuterten Verfahrensvariante A) der Auftrennung eines (z.B. kastenförmigen) Längsprofils in zwei komplementäre Halteabschnitte ist es hingegen bevorzugt, wenn eine y-Breite des Halteabschnitts quer zur Modulebene, insbesondere eine Breite seiner Stirnfläche (die zum Riegel zeigt), entlang der gesamten Länge des Halteabschnitts konstant ausgestaltet ist. Dabei kann aber die x-Breite des Halteabschnitt (die entlang der Längsrichtung der Riegel verläuft) in vertikaler Richtung nach oben hin (also in Längsrichtung des Pfostens) abnehmen. Dieses Abnehmen der Breite/dieses Verjüngen geschieht dabei vorzugsweise kontinuierlich; es können aber auch Ausgestaltungen vorgesehen sein, bei denen die Abnahme stufenweise implementiert ist.

Besonders bevorzugt sind Ausgestaltungen, bei denen die durch den Unterteilungstrennschnitt erhaltene Trennlinie geradlinig verläuft und somit die x-Breite des Halteabschnitts linear entlang der Längsachse des Pfostens nach oben hin abnimmt.

Durch diesen Ansatz lässt sich, insbesondere ausgehend von einem kastenförmigen Längsprofil und unter Einsatz des beschriebenen Trennverfahrens, ein Bausatz erhalten von (vorzugsweise gleich langen) Halteabschnitten für Pfosten einer PV-Anlage, die sich in ihrem jeweiligen Flächenträgheitsmoment unterscheiden und daher an unterschiedlichen Stellen der Tragkonstruktion eingesetzt werden können, um jeweils punktgenau die erforderliche Festigkeit des Pfostens sicherzustellen, was dem Konzept von Anspruch 11 folgt.

Bei der zuvor beschriebenen Separation eines ursprünglichen Längsprofils in zwei komplementäre Halteabschnitte gemäß Ansatz A) kann es ferner vorteilhaft sein, wenn die beiden Halteabschnitte symmetrisch zueinander ausgestaltet sind. Denn so können dann diese beiden Halteabschnitte in gleicher Orientierung in Pfosten der Tragkonstruktion eingesetzt werden und entwickeln dort die gleichen mechanischen Eigenschaften.

Längsprofile mit stetigem Querschnitt lassen sich besonders kostengünstig mittels Rollformen herstellen, weshalb diese Herstellungsmethode für die besagten ursprünglichen Längsprofile bevorzugt ist. Anschließend können die so erhaltenen Längsprofile mit konstantem Querschnitt ebenfalls sehr effizient mithilfe eines Rohrlasers in die beiden komplementäre Halteabschnitte aufgetrennt werden.

Eine Alternative zum Rollform-Verfahren besteht darin, eine geschlossene Profilform mittels Kaltwalzens und anschließendem Verschweißen zu erzeugen, wobei hierdurch insbesondere eine Kastenform des Längsprofils erhalten werden kann. Hierbei kann im Walzprozess auch bereits ein Stanzprozess integriert sein, wodurch Perforationen als spätere Durchstecköffnungen für die Riegel in die Flächen des Längsprofils eingebracht werden können. Die Perforationen können dabei über dünne Stege miteinander verbunden bleiben, wobei diese Stege anschließend mithilfe eines Trennverfahrens durchtrennt werden können. So können aus einem ursprünglich geschlossenen Längsprofil zwei zumindest teilweise halboffene und in ihrer Form komplementäre Längsprofile erhalten werden, die dann als jeweiliger Halteabschnitt eines Pfostens (oder zumindest als Teil desselben) dienen können.

Der große Vorteil der Erfindung besteht nun darin, dass je nach Verlauf der Verjüngung und/oder je nach Verlauf der besagten Trennlinie zwischen den beiden komplementären Halteabschnitten das Flächenträgheitsmoment des jeweiligen Halteabschnitts entlang seiner Längsrichtung maßgeschneidert werden kann. Insbesondere können so ausgehend von einem identischen ursprünglichen Längsprofil, durch Anpassen der Lage der Trennlinie, gleich lange aber unterschiedlich mechanisch stabile Halteabschnitte erhalten werden, und zwar vorzugsweise, ohne dass dabei die Wandstärke des Längsprofils angepasst werden muss. Insbesondere können daher alle Wandstärken der in einer erfindungsgemäßen Tragkonstruktion verwendeten Halteabschnitte identisch sein und dennoch können sich die Halteabschnitte im Materialeinsatz und damit in ihrer mechanischen Belastbarkeit signifikant unterscheiden.

Die Komplementarität der beiden komplementären Halteabschnitte kann dabei auch nur abschnittsweise ausgestaltet sein, etwa wenn ein unterer, im Querschnitt geschlossener, Abschnitt des Halteabschnitts unterschiedlich lang ausgestaltet ist, wodurch ebenfalls unterschiedlich steife Halteabschnitte bzw. ein unterschiedlicher Verlauf des Flächenträgheitsmoments in der z-Längsrichtung des Postens erzielt werden kann. Generell sind aber zahlreiche Ausgestaltungen von erfindungsgemäßen Halteabschnitten eines Pfostens denkbar, bei denen untere oder obere Abschnitte mit geschlossenem oder halboffenen Querschnitt ausgebildet sein können.

In allen Ausgestaltungen ist es aber vorteilhaft, wenn der untere Bereich des jeweiligen Halteabschnitts eine plane Anlagefläche (stirnseitig) bietet, mit welcher der Halteabschnitt flächig an einer zugehörigen Befestigungsfläche des unteren Befestigungsabschnitts des Pfostens (z.B. ausgestaltet als Rammprofil) flächig anliegen kann. Eine solche Ausgestaltung hat den technischen Vorteil, dass der Halteabschnitt nicht nur entlang der z-Richtung, also axial, gegenüber dem im Erdreich befestigten Befestigungsabschnitt verschoben werden kann, sondern dass der obere Halteabschnitt auch um eine x-Achse (= Längsachse der Riegel) gegenüber dem (möglicherweise windschief im Boden eingerammten) Befestigungsabschnitt verdreht werden kann. Hierbei kann also das Anliegen der Anlagefläche an der Befestigungsfläche ein Drehlager ausbilden.

Aus diesen Gründen ist es aber besonders vorteilhaft, wenn das geschlossene Längsprofil, aus welchem die beiden komplementären Halteabschnitte durch Auftrennen gewonnen werden, sowohl eine plane Vorder- als auch eine hierzu parallel verlaufende und ebenfalls plane Rückseitenfläche aufweist. Denn in diesem Fall können sowohl die Vorderseite als auch die Rückseite nach dem Auftrennen als jeweilige plane Anlagefläche des jeweiligen Halteabschnitts dienen. Bevorzugt liegt dabei die außenseitige Anlagefläche des jeweiligen Halteabschnitts an einer außenseitigen Fläche eines zugehörigen Befestigungsabschnitts an (insbesondere Rücken-an-Rücken). Bei anderen Ausgestaltungen kann hingegen die plane Außen-Anlagefläche des Halteabschnitts an einer innenseitigen Fläche des Befestigungsabschnitts anliegen (z.B. Rücken-an-Bauch-Anliegen). Letzteres wäre beispielsweise der Fall, wenn zwei C-Profile ineinandergesteckt werden, um als Befestigungbeziehungsweise Halteabschnitt zu dienen.

Bei der Verfahrensvariante A) kann somit zusätzlich vorgesehen sein, dass das ursprüngliche Längsprofil (welches unterteilt wird) als ein kastenförmiges Längsprofil mit einer planen Stirnfläche und einer dieser Stirnfläche gegenüberliegenden planen rückseitigen Rückenfläche ausgestaltet ist. Denn in diesem Fall kann nach dem Auftrennen dieses ursprünglichen Längsprofils in die beiden komplementären Teile (mithilfe des Unterteilungstrennschnitts) jedes dieser Teile eine plane Stirnfläche bieten, in welcher dann Durchstecköffnungen ausgebildet werden können. Alternativ können aber auch beispielsweise separate Halteelemente flächig an diesen Stirnflächen befestigt werden. Da das kastenförmige Längsprofil in zwei Halteabschnitte aufgeteilt wird, dient bei einem Halteabschnitt die vorderseitige Stirnfläche als Stirnfläche des Halteabschnitts und beim anderen Halteabschnitt die rückseitige Rückenfläche des (ursprünglichen) Längsprofils als Stirnfläche des Halteabschnitts.

Die beiden komplementären Teile, die auf Basis des jeweils eingesetzten Trennverfahrens erhalten werden, können jeweils zur Ausbildung eines jeweiligen Halteabschnitts eines Pfostens eingesetzt werden und hierfür mit einem jeweiligen weiteren/separaten unteren Befestigungsabschnitt mittelbar oder unmittelbar zu einem jeweiligen Pfosten verbunden werden, sodass im Ergebnis zwei Pfosten erhalten werden. Als Verbindungsverfahren kommt hier insbesondere ein Verschrauben in Frage, wobei die Verschraubung von Halte- und Befestigungsabschnitt auch über Zwischenteile vermittelt sein kann (dann also sind die Abschnitte nur mittelbar verbunden).

Der jeweilige Halteabschnitt kann bei der Variante B) aus wenigstens einem der mindestens zwei Blechteile mittels eines Verbindungsverfahrens wie beispielsweise Schrauben, Nieten oder Schweißen, insbesondere unter Verwendung eines Zwischenelements, hergestellt werden. Durch solche Verbindungsverfahren ist es möglich, dass der damit erhaltene Halteabschnitt zumindest abschnittsweise, vorzugsweise in einem unteren Bereich, einen geschlossenen Querschnitt aufweist, um dort lokal die Festigkeit zu erhöhen.

Die Erfindung wird nun anhand von Ausführungsbeispielen näher beschrieben, ist aber nicht auf diese Ausführungsbeispiele beschränkt. Es zeigt:
- Fig. 1: eine Ansicht von der Seite auf eine erfindungsgemäße Tragkonstruktion, deren Pfosten im Erdreich eingerammt sind,
- Fig. 2: eine Detailansicht auf die Tragkonstruktion der Fig. 1,
- Fig. 3: eine noch stärkere Vergrößerung des Detail-Ausschnitts der Fig. 2, wobei die unterschiedliche Ausbildung von Querschnittsverjüngungen an den jeweiligen Pfosten zu erkennen ist,
- Fig. 4: eine Seitenansicht in y-Richtung auf einen Halteabschnitt eines erfindungsgemäß ausgestalteten Pfostens,
- Fig. 5: eine Ansicht von hinten in x-Richtung auf den Halteabschnitt der Fig. 4,
- Fig. 6: eine Schrägansicht auf den Halteabschnitt 7 der Fig. 4 und 5,
- Fig. 7: eine Querschnittsansicht in der xy-Ebene auf einen weiteren Halteabschnitt 7, dessen Längsprofil 9 in dieser z-Höhe mittels eines geschlossenen umlaufenden Profilquerschnitts 12 ausgebildet ist,
- Fig. 8: eine Detailansicht auf die vordere Stirnfläche im Bereich einer Durchstecköffnung eines erfindungsgemäß ausgestalteten Halteabschnitts,
- Fig. 9: eine Ansicht von hinten auf die rückseitige Stirnfläche des Halteabschnitts der Fig. 8,
- Fig. 10 bis 12: mehrere Querschnittsansichten Q1, Q2 und Q3, wie sie in Fig. 9 in der jeweiligen z-Höhe markiert sind,
- Fig. 13: eine Querschnittsansicht eines Halteabschnitts 7, der Rücken-an-Rücken an einem mittels eines C-förmigen Längsprofils ausgestalteten Befestigungsabschnitts 6 anliegt,
- Fig. 14: eine alternative Möglichkeit, bei der der Halteabschnitt 7 Rücken-an-Bauch an einer Innenseite des Befestigungsabschnitts anliegt,
- Fig. 15: eine Seitenansicht auf eine weitere erfindungsgemäße PV-Anlage,
- Fig. 16 und 17: jeweils perspektivische Ansichten von schräg vorne und schräg hinten auf die PV-Anlage der Fig. 15,
- Fig. 18: ein Rücken-an-Rücken-Anliegen eines Halteabschnitts an einem Befestigungsabschnitt (analog zu Fig. 13),
- Fig. 19: ein Rücken-an-Bauch-Anliegen eines Halteabschnitt an einem Befestigungsabschnitt (analog zu Fig. 14),
- Fig. 20: eine perspektivische Ansicht auf einen Überlappungsbereich zwischen einem erfindungsgemäß ausgestalteten Halteabschnitt und einem damit verbundenen Befestigungsabschnitt (analog zu Fig. 19),
- Fig. 21: ein Blech, aus welchem zahlreiche Blechteile herausgeschnitten werden, um daraus durch Umformung erfindungsgemäße Halteabschnitte von Pfosten zu erhalten,
- Fig. 22: einen alternativen Ansatz zur Erzeugung von erfindungsgemäß ausgestalteten Halteabschnitten durch Unterteilung eines ursprünglichen Längsprofils in zwei komplementäre Teile mittels eines Unterteilungstrennschnitts,
- Fig. 23: eine Detailansicht auf eine erfindungsgemäße Tragkonstruktion, deren Pfosten Halteabschnitte aufweisen, die aus zwei Längsprofilen zusammengesetzt sind, wie in Fig. 24 illustriert,
- Fig. 24: den zweiteiligen Halteabschnitt der Pfosten der Tragkonstruktion aus Fig. 23 und im Vergleich hierzu
- Fig. 25: den einteiligen Halteabschnitt der Pfosten der Tragkonstruktion aus Fig. 3,

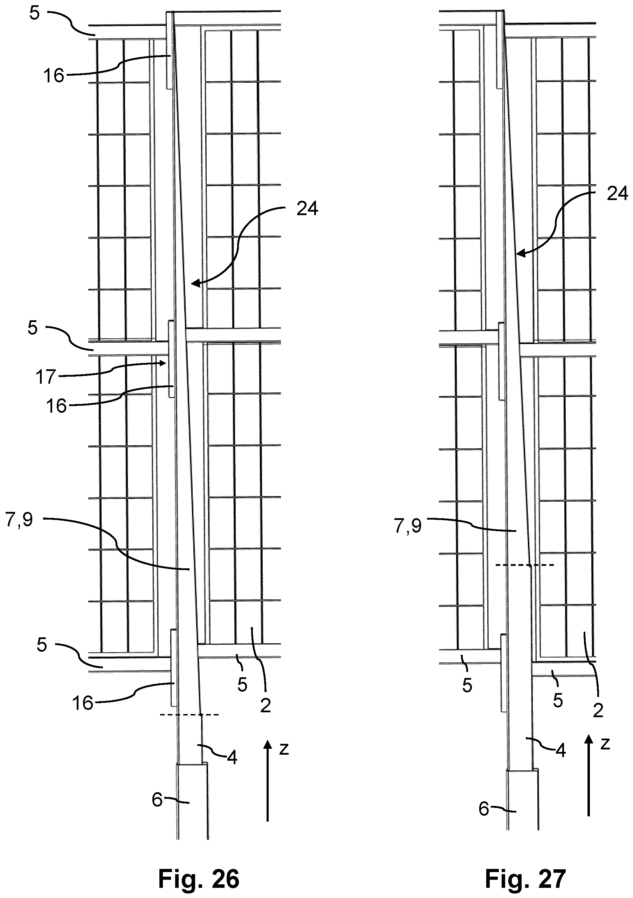

- Fig. 26 und 27: das unterschiedliche Ausmaß der Querschnittsverjüngung an den einzelnen Halteabschnitten der Pfosten, wie es bereits in Fig. 3 illustriert wurde,
- Fig. 28: eine Detailansicht auf die Durchstecköffnung eines erfindungsgemäßen Pfostens mit einem zweiteiligen Halteabschnitt, der aus zwei ineinander gesteckten Längsprofilen aufgebaut ist,
- Fig. 29-31: eine perspektivische Ansicht, eine Seitenansicht sowie eine Ansicht von oben auf eine erfindungsgemäße Tragkonstruktion ohne Riegel, wobei die PV-Module direkt an den Pfosten montiert sind,
- Fig.32 und Fig. 33: ein Beispiel eines erfindungsgemäßen Pfostens mit zweiteiligem Halteabschnitt, wobei ein inneres Profil zur Verstärkung eines äußeren Profils eingesetzt wird,
- Fig. 34 und 35: ein analoges Beispiel eines erfindungsgemäßen Pfostens mit zweiteiligem Halteabschnitt, wobei hier das äußere Überstülpprofil zur Verstärkung eines inneren längeren Längsprofils eingesetzt wird,
- Fig. 36: einen nicht-maßstabsgetreue schematische Illustration eines oberen Ausschnitts eines erfindungsgemäßen Pfostens einer Tragkonstruktion, dessen y-Breite in axialer Richtung variiert, um eine Querschnittsverjüngung auszubilden, und die
- Fig. 37-39: ein realistisches Beispiel eines Halteabschnitts eines erfindungsgemäßen Pfostens mit variabler y-Breite und variabler x-Breite.

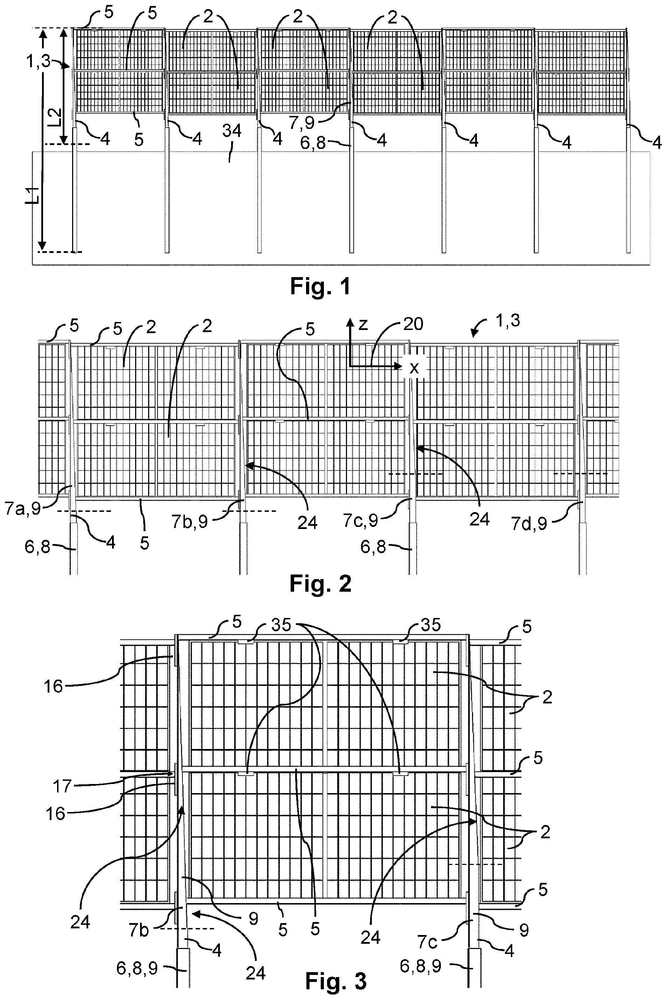

Die Figur 1 zeigt eine Tragkonstruktion 1, die zahlreiche Posten 4 aufweist, die in einer langen Reihe angeordnet sind und jeweils im Erdreich 34 verankert sind. Hierzu weist jeder Pfosten 4 einen Befestigungsabschnitt 6 in Form eines C-förmigen Ramm-Profils 8 aus, welches jeweils tief in das Erdreich 34 eingerammt ist.

In den Detailansichten der Figur 2 und Figur 3 erkennt man, dass der jeweilige oberhalb des Befestigungsabschnitts 6 angeordnete Halteabschnitt 7 des jeweiligen Postens 4 mit einer Länge L2 (Vgl. Fig. 1), an welchem die horizontal verlaufenden Riegel 5 (die jeweils zwei benachbarte Pfosten 4 miteinander verbinden) befestigt sind, mittels eines jeweiligen Längsprofils 9 ausgestaltet ist.

Bereits in der Seitenansicht der Figur 3 kann man anhand der gestrichelten Linien erkennen, dass der Querschnitt des Längsprofils 9, welches den jeweiligen Halteabschnitt 7b, 7c ausbildet, nach oben hin, in Längsrichtung 10 des jeweiligen Pfostens 4, abnimmt und dadurch eine jeweilige Querschnittsverjüngung 24 ausbildet. Mit anderen Worten nimmt also das mechanische Flächenträgheitsmoment des jeweiligen Halteabschnitts 7 in der Längsrichtung 10 nach unten hin zu. Der jeweilige Pfosten 4 weist somit im unteren Bereich eine höhere mechanische Belastbarkeit auf als an seinem oberen Ende.

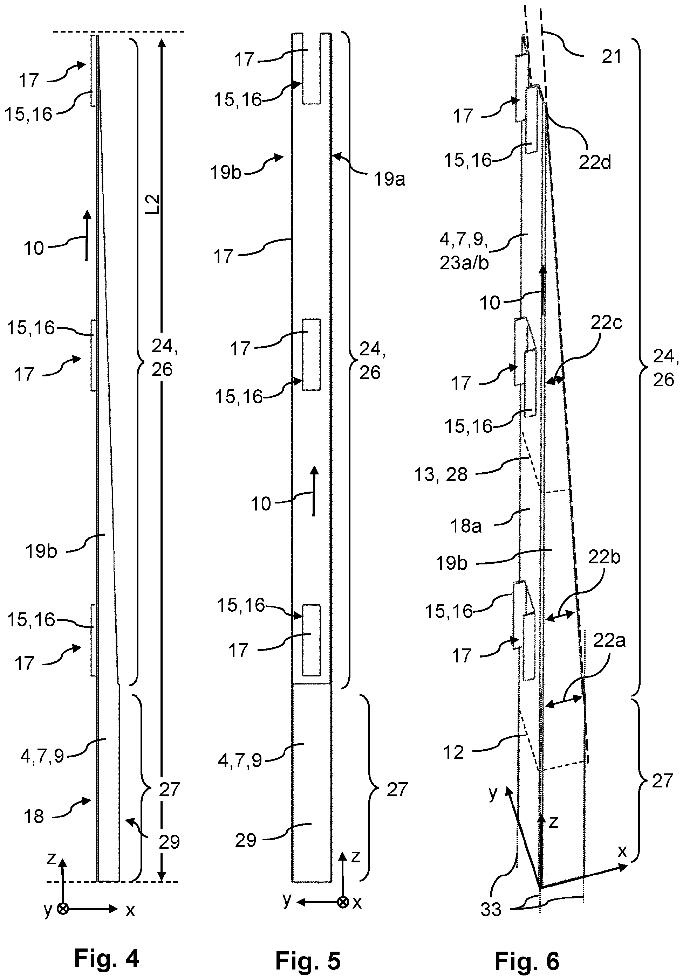

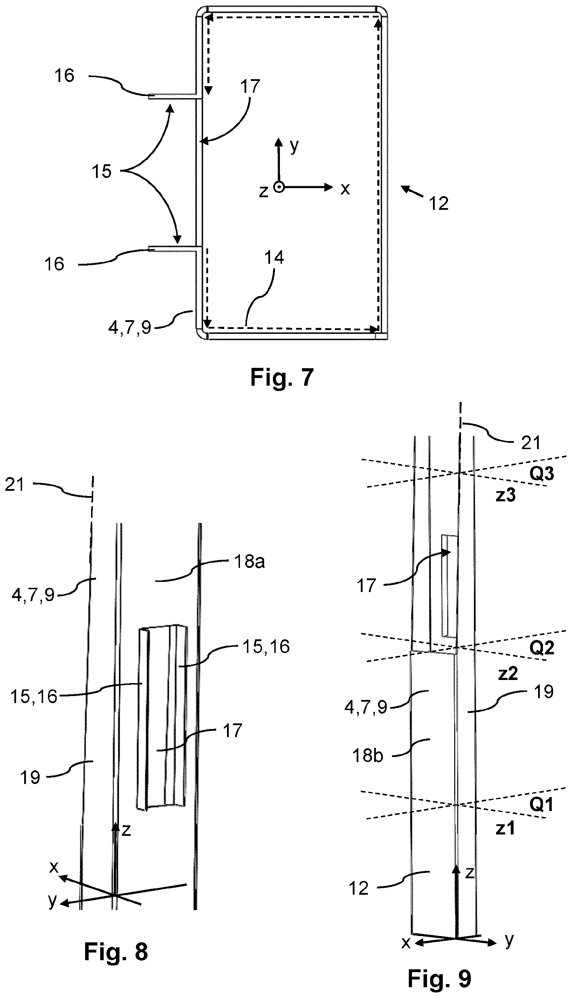

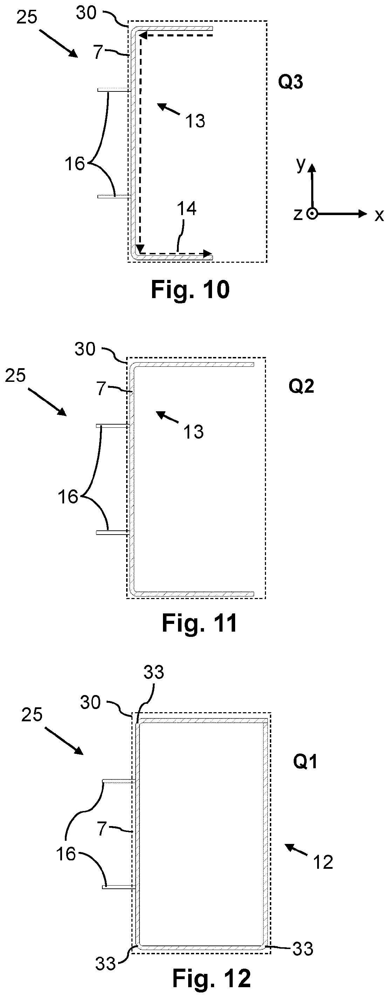

Aus den Figuren 4 bis 6 wird deutlich, dass der dortige Halteabschnitt 7 des jeweiligen Pfostens 4 bei der Tragkonstruktion der Figuren 1 bis 3 einteilig mittels eines einzigen Längsprofils 9 ausgestaltet ist. Die Querschnittsverjüngung 24 wird dabei durch Variation eines Querschnitts 25 des Längsprofils 9 in dessen Längsrichtung 10 erzielt. Dies kann man beispielsweise gut anhand der unterschiedlichen Querschnittsansichten der Figuren 10 bis 12 nachvollziehen, wobei die jeweilige z-Höhe des jeweiligen Querschnitts Q1/Q2/Q3 in Figur 9 illustriert ist.

In den Figuren 4-6 erkennt man auch, dass die besagte Querschnittsverjüngung 24 über mehr als 50 % der Gesamtlänge des Halteabschnitts 7 ausgebildet ist. Ferner ist dort 70 % der Länge L2 des Halteabschnitts 7 im Querschnitt halb offen ausgestaltet, während der untere Teil 27 von einem geschlossenen umlaufenden Profilquerschnitt 12 ausgebildet ist. Solche halb offenen Ausgestaltungen haben Vorteile hinsichtlich einer einfacheren Fertigung der Längsprofile 9.

In Figur 7 erkennt man, dass die Laschen 16, die an den jeweiligen Durchstecköffnungen 17 ausgebildet sind, Halteflächen 15 zur Verfügung stellen, an denen die Riegel 5 flächig befestigt werden können. Die Halteflächen 15 sind dabei in Bezug auf eine Richtung senkrecht zu der in Figur 2 illustrierten xz-Modulebene 20 (in welcher die aktiven Flächen der PV-Module 2 verortet sind) nach innen auf diese Modulebene 20 hin versetzt. Dadurch können die Riegel 5 in der besagten y-Richtung wesentlich schmaler ausfallen als die Pfosten 4 in der y-Richtung breit sind.

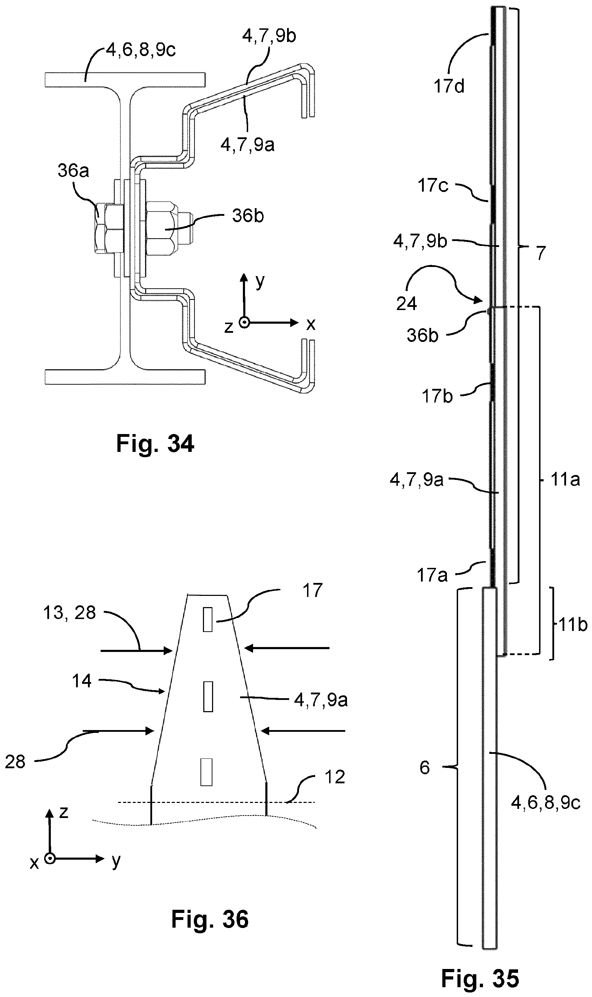

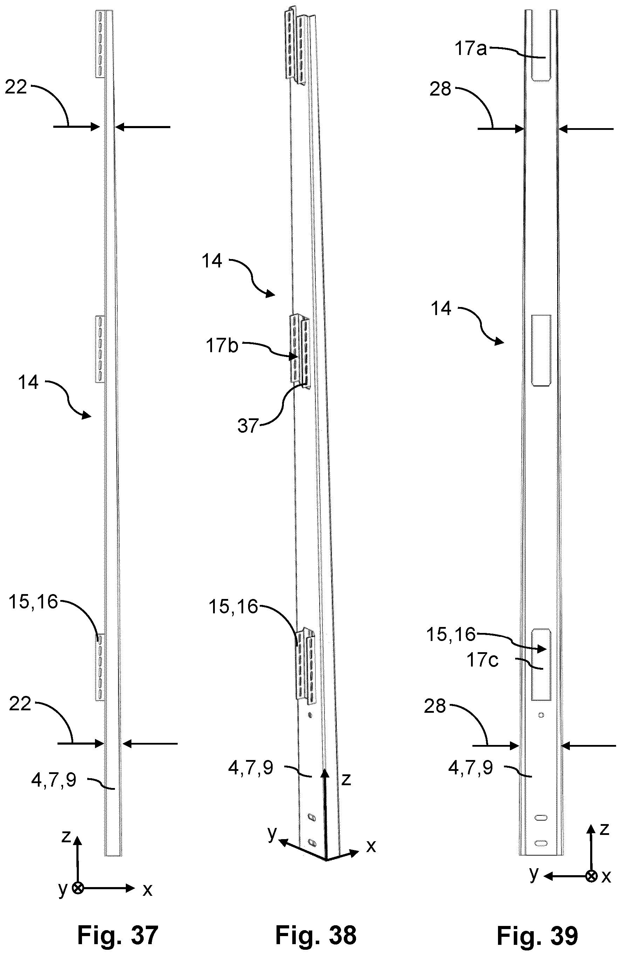

Im Ausgestaltungsbeispiel der Figuren 4 bis 6 verringert sich (aufgrund der ausgebildeten Querschnittsverjüngung 24) die illustrierte x-Breite 22 (die in Längsrichtung der Riegel 5 verläuft) über mehr als 30 % der Gesamtlänge L2 des Halteabschnitts 7 von unten nach oben, wobei die Verringerung bei dem gezeigten Beispiel mehr als 80 % beträgt. Der Halteabschnitt 7 läuft somit - bezogen auf die besagte x-Breite 22 - konisch nach oben hin zu. Die y-Breite 28 ist bei dem Beispiel der Figur 6 hingegen konstant gehalten. Eine erfindungsgemäße Querschnittsverjüngung 24 könnte aber alternativ oder ergänzend auch durch eine Variation dieser y-Breite 28 des Halteabschnitts 7 erzielt werden, wie in Figur 36 schematisch illustriert. Das Beispiel der Figuren 37-39 zeigt demgegenüber einen erfindungsgemäß aus einem einzigen Profil 9 einteilig ausgestalteten Halteabschnitt 7 eines Pfostens 4, wobei sowohl die x-Breite 22 als auch die y-Breite 28 in der z-Richtung nach oben hin abnimmt und so eine Querschnittsverjüngung 14 ausgebildet wird. Bei dieser Variante läuft der Halteabschnitt 7 somit jeweils entlang von zwei orthogonal zueinander stehenden Achsen (x/y) konisch in der z-Richtung zu, sodass sich das Flächenträgheitsmoment kontinuierlich in der z-Richtung verringert.

Alternativ hierzu kann eine erfindungsgemäße Querschnittsverjüngung 24 aber auch ohne Variation des Querschnitts des jeweiligen Profils 9 erzielt werden, wenn der Halteabschnitt 7 aus wenigstens zwei Längsprofilen 9a, 9b zusammengesetzt ist, die sich auch in Ihrer Querschnittsform unterscheiden können (aber nicht zwingend müssen).

Anhand der unterschiedlichen Breiten 22a, 22b, 22c und 22d in Figur 6 erkennt man auch gut, dass dort die x-Breite 22 von beiden Seitenflächen 19a und 19b des Längsprofils 9 des Halteabschnitts 7 in der Längsrichtung 10 nach oben hin kontinuierlich abnimmt.

Wie die Figur 12 mit Blick auf die Figur 9 zeigt, ist im Bereich der Höhe z1 der dortige Querschnitt Q1 mittels eines geschlossenen umlaufenden unteren Profilquerschnitts 12 ausgebildet, sodass der Halteabschnitt 7 in diesem Bereich eine hohe mechanische Belastbarkeit aufweist.

Durch den in Figur 6 und Figur 9 bereits angedeuteten Unterteilungstrennschnitt 21 ist das geschlossene, kastenförmige ursprüngliche Längsprofil 9 aufgetrennt worden, sodass in den oberen Bereichen, in der Höhe z2 und z3, halboffene Querschnitte Q2 und Q3 resultieren, die in den Figuren 10 und 11 illustriert sind. Aufgrund des zur Längsrichtung 10 des Pfostens 4 schrägen Verlaufs des Unterteilungsquerschnitts 21 (Vgl. Fig. 6) nimmt das Ausmaß der Querschnittsverjüngung 24 dabei nach oben hin zu, was auch an der abnehmenden Querschnittslänge 14 (man vergleiche den Querschnitt Q3 mit dem Querschnitt Q2) erkennbar ist. Auf diese Weise kann also im oberen Abschnitt des Halteabschnitts 7 erheblich Material eingespart werden.

In den Figuren 10 bis 12 erkennt man auch gut, dass der jeweilige Querschnitt Q innerhalb einer gleichen (mittels der gestrichelten Linie illustrierten) Einhüllenden 30 liegt. In Bezug auf die Tragkonstruktion 1 der Figuren 1 bis 3 gilt dies für sämtliche Pfosten 4, weil diese allesamt aus demselben Rohmaterial, nämlich demselben kastenförmigen Längsprofil 9, hergestellt wurden, d.h. deren Querschnittsform ist identisch. Die kastenförmige Querschnittsform stellt dabei nur ein Beispiel von zahlreichen möglichen Querschnittsformen dar. Allerdings unterscheidet sich zumindest teilweise der jeweilige axiale Verlauf des Flächenträgheitsmoments des jeweiligen Längsprofils 9 zwischen einzelnen der Pfosten 4. Denn das jeweilige Ausmaß der jeweiligen Querschnittsverjüngung 24 variiert erkennbar zwischen einzelnen der Pfosten 4 (vergleiche die gestrichelten Linien in Figur 3). Im Beispiel der Figur 3 unterscheidet sich beispielsweise die jeweilige z-Höhe, ab der die jeweilige Querschnittsverjüngung 24 nach oben hin einsetzt (Vgl. die gestrichelten horizontalen Linien). Ausführbar wäre aber auch, mehr oder weniger Material am jeweiligen Halteabschnitt 7 in gleicher Höhe zu entfernen, um so eine gewünschte Querschnittsverjüngung 24 und damit die mechanische Belastbarkeit des jeweiligen Pfostens 4 gezielt einzustellen und/oder Material einzusparen, oder etwa, eine axiale Überlappungslänge 11 zwischen den Längsprofilen 9 eines zweiteiligen Halteabschnitts 7 (siehe Figur 24) von Pfosten 4 zu Pfosten 4 unterschiedlich lang zu wählen.

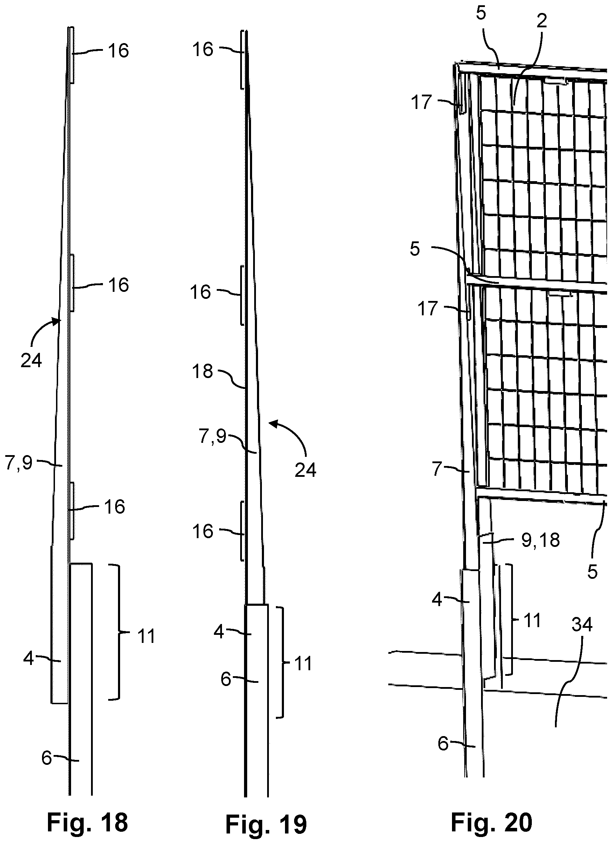

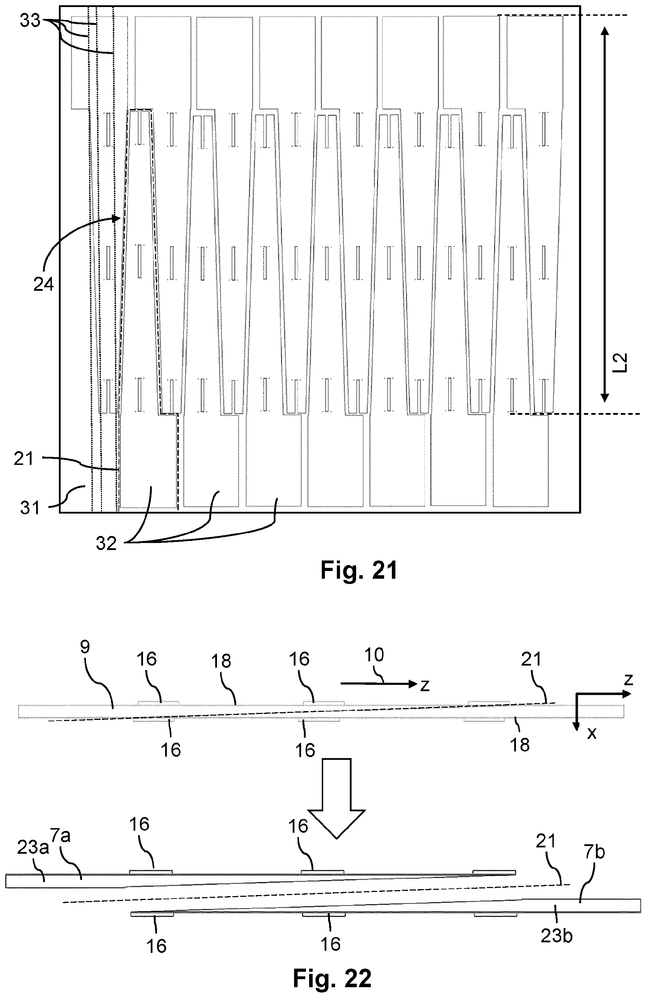

Das Konzept, die jeweilige Verjüngung 24 des Längsprofils 9 mittels eines Unterteilungstrennschnitts 21 zu definieren, ist in der Figur 22 im Detail illustriert: Dort verläuft der Unterteilungstrennschnitt 21 streng in der y-Richtung und damit senkrecht zur xz-Zeichenebene. Durch die Unterteilung des ursprünglichen kastenförmigen Längsprofils 9, welches eine plane vordere und eine plane rückseitige Stirnfläche 18 bietet, mittels des Unterteilungstrennschnitts 21 können, wie im unteren Teil der Figur 22 illustriert, zwei komplementäre Teile 23a und 23b erhalten werden, die jeweils als ein erfindungsgemäßer Halteabschnitt 7 eines Pfostens 4 verwendet werden können. Die in den Stirnflächen 18 ausgebildeten Durchstecköffnungen 17 sowie die durch Aufbiegen an diesen Stellen erhaltenen Laschen 16, die bereits in Figur 6 illustriert wurden, können dabei, wie in Figur 22 illustriert, an beiden Stirnflächen 18 des ursprünglichen Längsprofils 9 bereits ausgebildet werden/sein. Hierbei kann die jeweilige z-Position der jeweiligen Lasche 16/Durchstecköffnung 17 individuell gewählt werden, sodass diese Positionen an den beiden Teilen 23a und 23b auch unterschiedlich ausfallen können. Die aus dem Unterteilungstrennschnitt 21 resultierende axiale Variation des Querschnitts des Profils 9 erkennt man auch gut in den Seitenansichten der Figuren 18 und 19.

Wie die Figur 24 illustriert, die einen Halteabschnitt 7 mit Überstülp-Profil 9a zeigt, welches außenseitig auf die Außenseite des inneren Profils 9a aufgeschoben ist, muss ein erfindungsgemäßer Halteabschnitt 7 nicht zwingend einteilig mittels eines einzigen Längsprofils 9 ausgestaltet sein, wie in dem Beispiel der Figur 25 (Dort ist ein einteiliger Halteabschnitt 7 gezeigt, der in einen unteren C-förmigen Befestigungsabschnitt 6 eingesetzt ist). Sondern die Halteabschnitte 7 der Pfosten 4 können auch (mindestens) zweiteilig mittels eines unteren Längsprofils 9a und eines obersten Längsprofils 9b ausgestaltet sein (Vgl. Fig. 24). Solche Ausgestaltungen haben insbesondere den Vorteil, dass erfindungsgemäße Querschnittsverjüngungen 24 des Halteabschnitts 7 ohne axiale Variation des jeweiligen Querschnitts des jeweiligen Längsprofils 9 erhalten werden können.

Wie man in Figur 24 erkennt, sind die beiden dortigen Längsprofile 9a und 9b ineinander gesteckt und überlappen dabei über die gesamte Länge L3 (= axiale Überlappungslänge 11) des unteren Längsprofils 9a. Es sind aber auch Ausgestaltungen im Rahmen der Erfindung ausführbar, bei denen die Profile 9a, 9b nur in einem mittleren Abschnitt überlappen, insbesondere dann, wenn nur das untere Profil 9a am Befestigungsabschnitt 6 montiert und/oder in diesen eingeschoben sein soll.

In dem in Figur 24 gezeigten Überlappungsbereich 11 verstärkt somit das untere Längsprofil 9a ("Überstülpprofil") das obere Längsprofil 9b (inneres Profil), welches sich über die gesamte Länge L2 des Halteabschnitts 7 erstreckt. Entsprechend wird auch der obere Teil 26 des Halteabschnitts 7 nur durch das oberste / innere Längsprofil 9b gebildet, während der untere Teil 27 sowohl durch das oberste Längsprofil 9b als auch durch das untere / äußere Längsprofil 9a gebildet ist. Die unterste Durchstecköffnung 17 verläuft dabei durch beide Profile 9a, 9b, sodass der unterste Riegel 5 in beliebiger Einstecktiefe in x-Richtung in diese Durchstecköffnung 17 eingeführt werden kann.

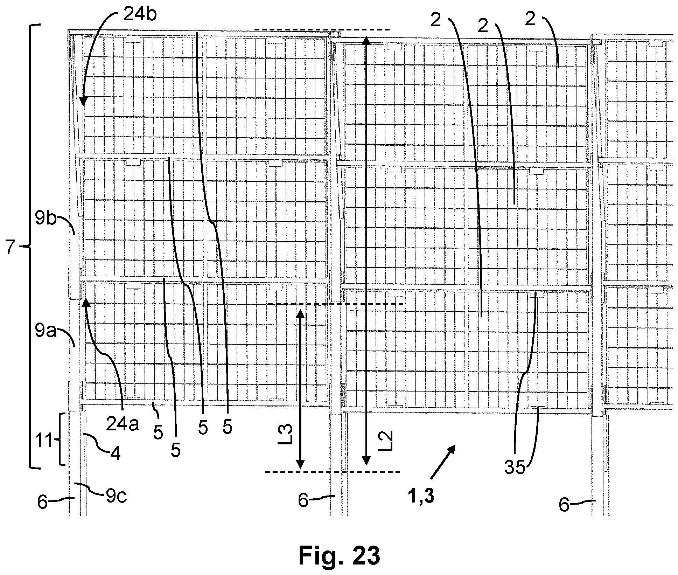

Mit dem in Figur 24 gezeigten zweiteiligen Halteabschnitt 7 mit Gesamtlänge L2 kann eine Tragkonstruktion 1 wie in Figur 23 illustriert erhalten werden: Dort ist das untere Längsprofil 9a mit Länge L3 (mitsamt dem darin bereits eingesteckten oberen Längsprofil 9b mit Länge L2) in dem in Figur 23 gezeigten Überlappungsbereich 11 (von Länge L3) in ein unterstes Längsprofil 9c eingesteckt, welches den Befestigungsabschnitt 6 des Pfostens 4 (mit Gesamtlänge L1) bildet. Dabei liegt das untere Längsprofil 9a mit seiner Stirnfläche 18 flächig an einer Innenfläche des (den Befestigungsabschnitt 6 ausbildenden) untersten Längsprofils 9c an. Das untere Längsprofil 9a bildet hier ein äußeres Längsprofil und das oberste Längsprofil 9b ein inneres Längsprofil. Hierbei verstärkt das äußere Profil 9a das innere Profil 9b im unteren Bereich 27 des Halteabschnitts 7, sodass dort ein erhöhtes Flächenträgheitsmoment zum Tragen kommt und eine erste Querschnittsverjüngung 24a ausgebildet wird. Zudem nimmt der Querschnitt und damit das Flächenträgheitsmoment des obersten Längsprofils 9b ab der Höhe z2 ab, weil die Länge der Seitenwandung in x-Richtung und damit die effektive Querschnittsfläche ab dieser Stelle nach oben hin kontinuierlich abnimmt, sodass dort eine zusätzliche zweite Querschnittsverjüngung 24b realisiert ist.

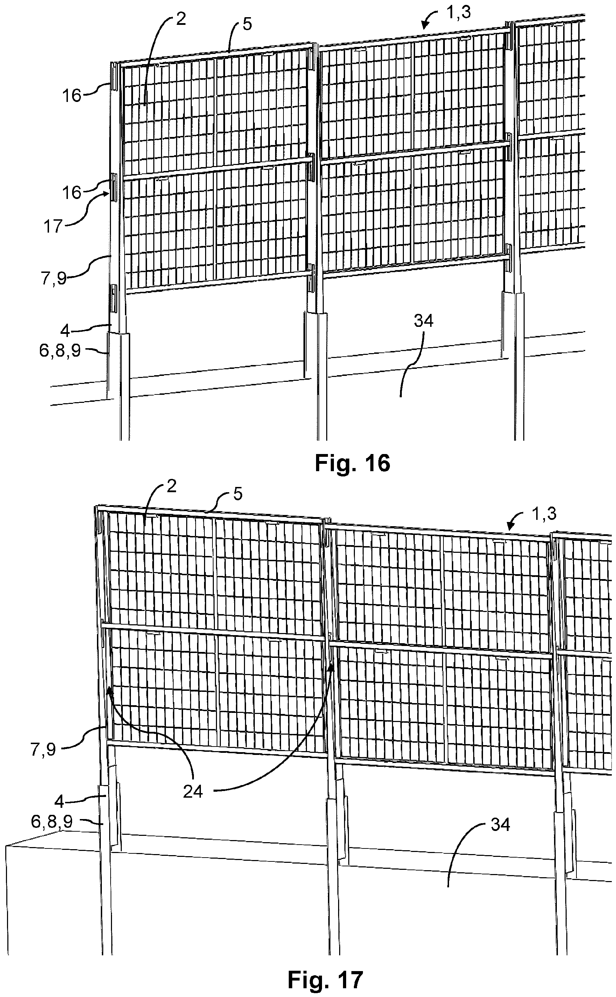

Man erkennt ferner in Figur 23, dass eine erfindungsgemäße Tragkonstruktion 1 auch dazu ausgestaltet sein kann, drei übereinander angeordnete Reihen an bifazialen PV-Modulen 2 zu tragen. Hierbei können die PV-Module 2 beispielsweise wie illustriert jeweils mittels spezieller Halteelemente 35 an den Riegeln 5 befestigt sein. Mit anderen Worten bietet also der jeweilige Halteabschnitt 7 im Beispiel der Figur 23 insgesamt vier übereinander angeordnete Durchstecköffnungen 17, in die jeweils ein entsprechender Riegel 5 eingesteckt ist. Die bereits erwähnten Durchstecköffnungen 17 sind in der jeweiligen vorderseitigen Stirnfläche 18 des Halteabschnitts 7 ausgebildet, welche an die Seitenflächen 19a und 19b angrenzt (Vgl. etwa Fig. 6 oder Fig. 16).

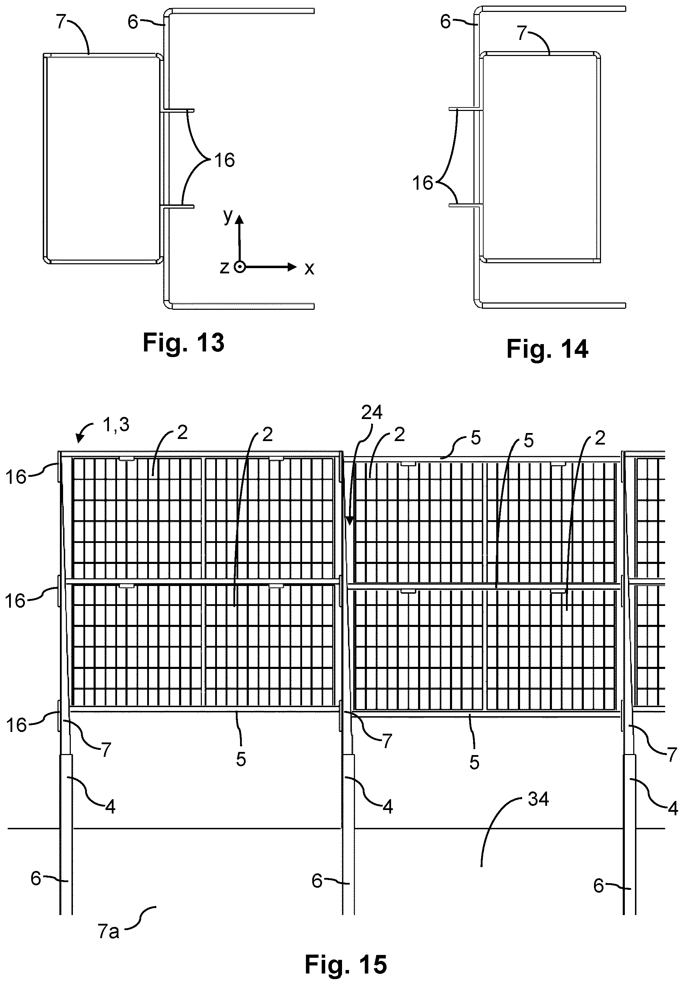

Bei dem zweiteilig ausgestalteten Halteabschnitt 7 der Figur 24 nimmt die x-Breite 22 des obersten Längsprofils 9b ab der Höhe z2 ebenfalls in z-Richtung nach oben hin kontinuierlich ab, während die x-Breite 28b über die gesamte Länge des obersten Längsprofils 9b konstant bleibt. Im Bereich der untersten Durchstecköffnung 17 des Halteabschnitts 7 ist aber, durch den Einsatz des zweiten unteren Längsprofils 9a, sowohl die y-Breite 28a als auch die x-Breite 22 des Querschnitts des Halteabschnitts 7 jeweils vergrößert im Vergleich zu den jeweiligen Breiten des oberen Längsprofils 9b. Dies verleiht dem Halteabschnitt 7 in seinem unteren Teil 27 zusätzliche mechanische Stabilität. Technisch äquivalent hierzu kann eine Ausgestaltung angesehen werden, bei der nicht ein äußeres Längsprofil (wie das Längsprofil 9a im Fall der Fig. 24), sondern ein inneres Längsprofil eingesetzt wird, um das in Figur 24 gezeigte oberste Längsprofil 9b zu verstärken: In diesem Fall wäre das kürzere untere Längsprofil 9a somit im Innern des Querschnitts des obersten Längsprofils 9a angeordnet, wodurch ebenfalls eine wirksame Vergrößerung des Flächenträgheitsmoments erzielbar ist. Ferner ist es ebenso technisch wirksam und im Rahmen der Erfindung möglich, dass zwei oder mehr Profile 9, die den Halteabschnitt 7 ausbilden, nicht jeweils ineinander geschoben sind, sondern nur aneinander anliegen, beispielsweise in dem die Profile 9a, 9b Rücken-an-Rücken liegend (ähnlich wie in Fig. 13 illustriert) montiert werden. Auch in diesem Fall kann eine wirksame lokale Vergrößerung des Flächenträgheitsmoments erzielt werden.

Neben dem in Figur 22 gezeigten Herstellungsansatz, bei dem der Verlauf des beim Auftrennen des Längsprofils 9 eingesetzten Unterteilungsquerschnitts 21 die jeweilige Querschnittsverjüngung 24 der beiden erhaltenen Halteabschnitte 7a und 7b vorgibt, kann erfindungsgemäß auch durch Umformung eine solche Querschnittsverjüngung 24 ausgebildet werden. Hierzu illustriert Figur 21 ein Blech 31, das mittels eines Trennverfahrens (zum Beispiel Stanzen oder Laserschneiden, je nach zu fertigender Stückzahl) in mehrere Blechteile 32 aufgetrennt wird. Die gestrichelte Linie illustriert dabei den Verlauf des jeweiligen Unterteilungstrennschnitts 21. Jedes der so erhaltenen Blechteile 32 kann nach dem Vereinzeln entlang von den mittels gepunkteten Linien illustrierten Biegelinien 33 umgeformt werden, sodass entsprechende Halteabschnitte 7 erhalten werden können. Man vergleiche hierzu die illustrierten Biegelinien 33 in Figur 6. Auch hier gibt aber der Verlauf des Unterteilungstrennschnitts 21 die jeweilige Querschnittsverjüngung 24 vor. Bei dem Beispiel der Figur 6 erstreckt sich diese über wenigstens 40 % der Gesamtlänge des Halteabschnitts 7. Die in Figur 5 illustrierte Rückenfläche 29 fällt dabei mit der in der Figur 22 unteren Stirnfläche 18 des ursprünglichen Längsprofils 9 zusammen, die in der oberen Hälfte der Figur 22 illustriert ist.

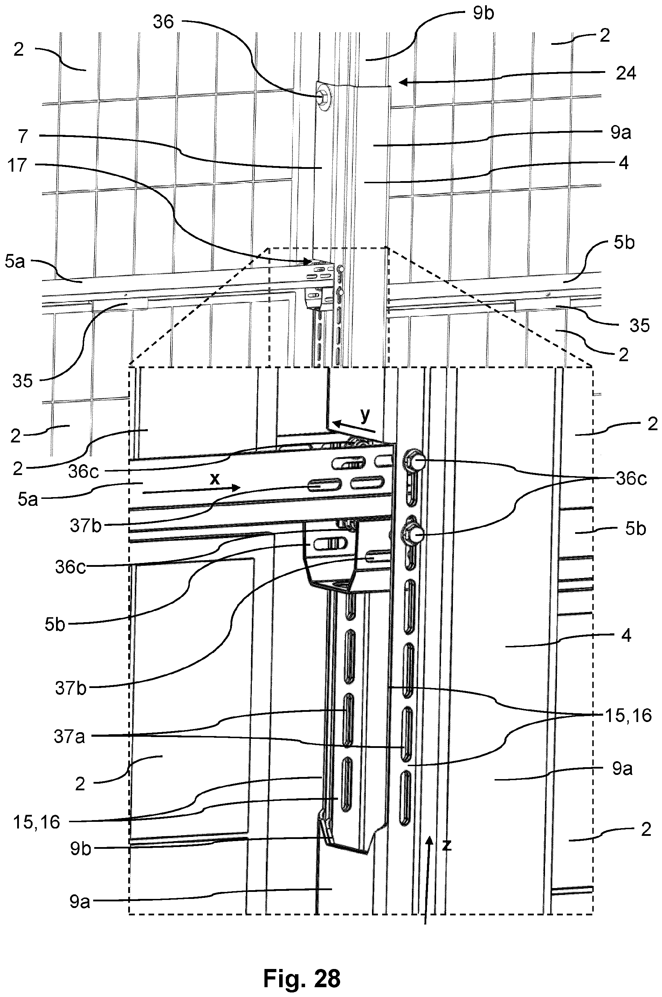

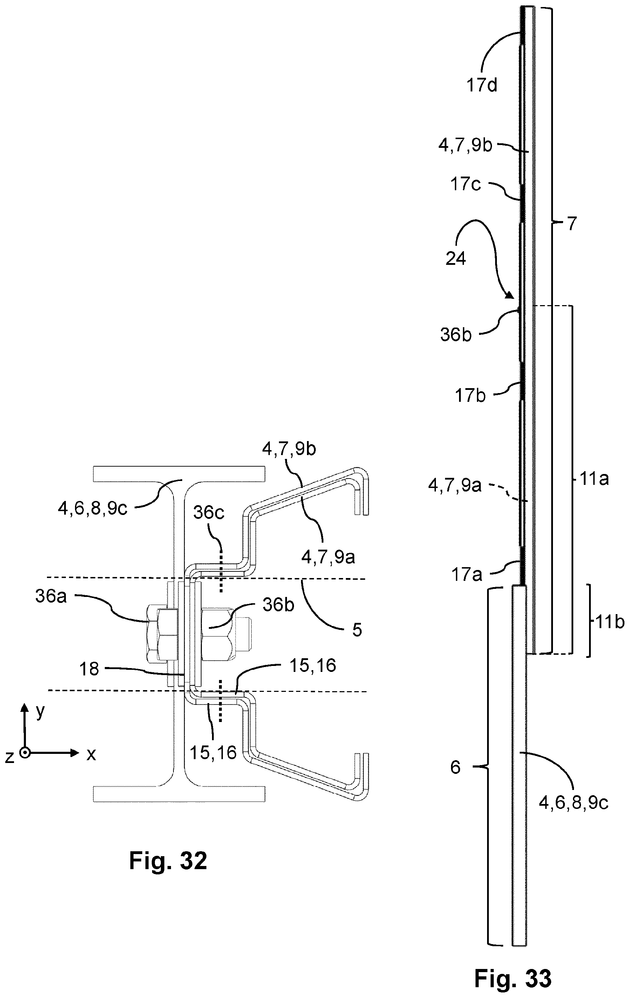

Die Figur 28 zeigt eine detaillierte Ansicht auf eine Durchstecköffnung 17 die an einem Halteabschnitt 7 eines erfindungsgemäßen Pfostens 4 ausgestaltet ist: Man erkennt, dass beide Längsprofile 9, das innere längere Längsprofil 9b und das äußere, kürzere und auf das innere Profil 9b aufgestülpte Längsprofil 9a, jeweils eine korrespondierend Öffnung aufweisen, die zusammen die Durchstecköffnung 17 bilden. Ferner erkennt man, dass beide Profile 9a, 9b jeweils eine Lasche 16 eines Laschenpaars bzw. eine jeweilige Haltefläche 15 zum Halten der Riegel 5 bereitstellen. Da beide Längsprofile 9a, 9b auf der Rückseite halb offen ausgestaltet sind (wie im Beispiel der Figur 32) können sowohl der linke Riegel 5a als auch rechte Riegel 5b in die Durchstecköffnung 17 eingesteckt und mittels Verschraubungen 36c an den vertikal ausgerichteten Langlöchern 37c (die eine Anpassung der z-Höhe der Riegel 5 ermöglichen) der beiden Profile 9a, 9b des Halteabschnitts 7 befestigt werden (Vgl. auch Fig. 32). Die Riegel 5a, 5b, weisen horizontal ausgerichtete Langlöcher 37b auf, was eine Verstellung in x-Richtung beim Verschrauben mit den Profilen 9a, 9b ermöglicht.

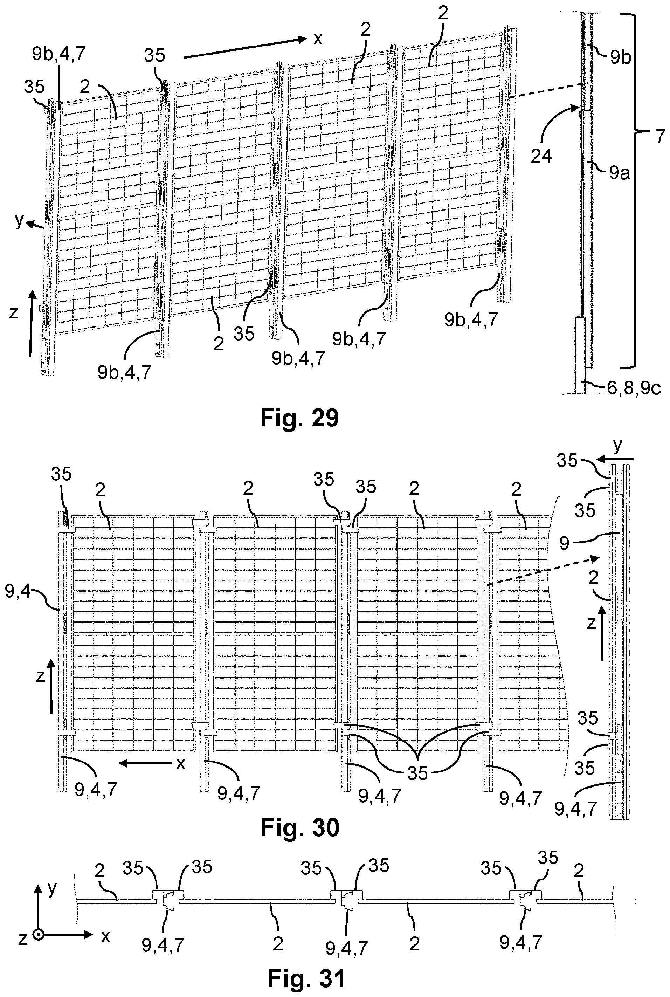

Die Figuren 29-31 zeigen einen Ausschnitt aus einer möglichen Ausgestaltung einer erfindungsgemäßen Tragkonstruktion 1, die auf Riegel 5 verzichtet und stattdessen die PV-Module 2 direkt mittels Halteelementen 35 an den Pfosten 4 befestigt. Gezeigt sind dabei jeweils nur die oberen Halteabschnitte 7, die mit erfindungsgemäßen Querschnittsverjüngungen 24 ausgestaltet werden können, etwa indem zwei Profile 9a, 9b ineinander gesteckt werden, wie am rechten Rand der Figur 29 angedeutet. Die obersten Profile 9b der Pfosten 4 sind bei diesem Ausgestaltungsbeispiel ebenfalls mit halboffenem Querschnitt ausgestaltet. Hierbei ist die Öffnung des Pfosten-Profils 9 (Vgl. Fig. 31) in x-Richtung orientiert, wie im Beispiel der Fig. 32 (D.h., die Pfostenorientierung ist bei beiden Beispielen gleich). Es sind aber auch Ausgestaltungen realisierbar, bei denen die Pfosten-Öffnung beispielsweise in y-Richtung orientiert ist.

Die Figuren 32 - 35 zeigen zwei Beispiele eines erfindungsgemäßen Pfostens 4 (ähnlich dem aus Fig. 28), der aus insgesamt drei Längsprofilen 9a, 9b, 9c zusammengesetzt ist. Das unterste Profil 9c ist mit I-förmigen Querschnitt ausgestaltet und kann als Rammprofil 8 ins Erdreich 34 eingerammt werden, um als Befestigungsabschnitt 6 zu dienen. Der Halteabschnitt 7 ist bei beiden Beispielen durch die beiden ineinander gesteckten Profile 9a, 9b gebildet. Hierbei sind vier Durchstecköffnungen 17a-17d ausgebildet, die durch beide Profile 9a, 9b verlaufen. Beide Profile 9a, 9b stellen dabei jeweils ein Paar aus Laschen 16 bereit, die als Halteflächen 15 dienen, um die Riegel 5 (mittels gestrichelter Linien in Fig. 32 angedeutet) mit dem Halteabschnitt 7 verschrauben zu können (mittels Verschraubung 36c).

Im Beispiel der Fig. 32-33 ist das längere (äußere) Profil 9b außen angeordnet, während das kürzere (innere) Profil 9a im Inneren des Querschnitts des Profils 9b angeordnet ist (vgl. Fig. 32). Im Beispiel der Fig. 34-35 ist hingegen das oberste Profil 9b das innere Profil, sodass man auch an der Außenseite eine Stufe zum äußeren Profil 9a in der Seitenansicht der Fig. 35 erkennt (obere Grenze des Überlappungsbereichs 11a).

Bei beiden Ausgestaltungen der Fig. 32-35 sind die beiden Profile 9a, 9b mit halboffenem in axialer Richtung konstanten Querschnitt ausgebildet. Ferner ist der oberste Teil des Halteabschnitts 7 ausschließlich durch das Profil 9b gebildet, während der untere Teil durch beide Profile 9a, 9b gebildet ist. Und der Querschnitt des inneren Profils folgt demjenigen des äußeren Profils (im Beispiel über eine gesamte Querschnittslänge des jeweiligen Querschnittsverlaufs). Da die Profilformen einander folgen, sind die beiden Profile 9a, 9b in z-Richtung axial gegeneinander verschiebbar und andererseits ist ein Formschluss gebildet, der signifikante Relativbewegungen in der xy-Ebene zwischen beiden Profile 9a, 9b verhindert. Beide Profile 9a, 9b sind über die Verschraubung 36b miteinander verbunden. Zudem sind beide, im Überlappungsbereich 11b, mit dem Befestigungsabschnitt 6, mittels der Verschraubung 36a, mit dem Profil 9c verbunden.

Im Bereich der Überlappung 11a zwischen beiden Profilen 9a, 9b liegt im Fall der Fig. 34 das innere Profil 9a "Rücken-an-Bauch" flächig mit seiner in der yz-Ebene verlaufenden Stirnfläche 18 an der korrespondierenden Innenfläche des äußeren Profils 9b an; im Fall der Fig. 32 ist es umgekehrt.

Zusammenfassend wird ein neuer Ansatz vorgestellt, mit dem eine Tragkonstruktion 1 zum Tragen von bifazialen PV-Modulen 2 erhalten werden kann, die in Bezug auf Fertigungskosten aber auch mechanische Stabilität optimiert ist. Hierzu wird vorgeschlagen, an Halteabschnitten 7 von jeweiligen Pfosten 4 der Tragkonstruktion 1, an welchen PV-Module 2 oder die PV-Module 2 tragende horizontal verlaufende Riegel 5 befestigt sind, jeweilige Querschnittsverjüngungen 24 auszubilden (durch Variation eines axialen Querschnittsverlaufs eines Längsprofils und/oder durch Verwendung mehrerer Längsprofile 9 für den Halteabschnitt 7), um so das mechanische Flächenträgheitsmoment des Pfostens 4 lokal gezielt einstellen und gleichzeitig eine Materialersparnis erzielen zu können (vergleiche Figur 3 oder etwa Figur 23).

### Bezugszeichenliste

- 1: Tragkonstruktion
- 2: bifaziales PV-Modul (kann Sonnenlicht aus beidseitigem Einfall in elektrischen Strom umwandeln)
- 3: PV-Anlage
- 4: Pfosten
- 5: Riegel
- 6: Befestigungsabschnitt
- 7: Halteabschnitt
- 8: Rammprofil
- 9: Längsprofil (z.B. ausgestaltet als metallisches Stranggussprofil)
- 10: Längsrichtung (von 4)
- 11: axialer Überlappungsbereich (dort überlappen 6 und 7)
- 12: unterer (Längs-)Profilquerschnitt
- 13: oberer (Längs-)Profilquerschnitt
- 14: Querschnittslänge (von 13, gemessen in der Querschnittsebene)
- 15: Haltefläche (zum Halten von 5)
- 16: Lasche
- 17: Durchstecköffnung (zum Ein-/Durchstecken von 5)
- 18: (vorderseitige oder rückseitige) Stirnfläche (von 4/7/9)
- 19: Seitenfläche (von 4/7/9; grenzt an 18 an)
- 20: Modulebene
- 21: Unterteilungstrennschnitt
- 22: x-Breite (von 19, z.B. gemessen in Längsrichtung der Riegel)
- 23: komplementäre Teile (eines ursprünglichen Längsprofils)
- 24: Querschnittsverjüngung
- 25: Querschnitt
- 26: oberer Teil (von 7)
- 27: unterer Teil (von 7)
- 28: y-Breite
- 29: Rückenfläche
- 30: Einhüllende
- 31: Blech
- 32: Blechteile
- 33: Biegelinie (entlang derer 32 zu 7 umgebogen werden)
- 34: Erdreich
- 35: Halteelement
- 36: Verschraubung
- 37: Langloch

## Patentansprüche

1. **Tragkonstruktion (1),** ausgelegt zum Tragen von bifazialen Photovoltaik-Modulen (2),
- wobei die Tragkonstruktion (1) mehrere Pfosten (4) aufweist, die an oder im Erdreich (34) befestigt oder verankert sind,
- wobei die Pfosten (4) jeweils Halteabschnitte (7) bereitstellen, welche zum Halten der Photovoltaik-Module (2) vorgesehen sind, und
- wobei der jeweilige Halteabschnitt (7) des jeweiligen Pfostens (4) mittels wenigstens eines Längsprofils (9,9a,9b) ausgestaltet ist, **dadurch gekennzeichnet,**
- **dass** sich ein Querschnitt (25) des jeweiligen Halteabschnitts (7), insbesondere ein Querschnitt (25) von wenigstens einem Längsprofil (9a) des Halteabschnitts (7), in einer Längsrichtung (10) des jeweiligen Pfostens (4) nach oben hin derart verjüngt,
- **dass** über wenigstens 20% einer Gesamtlänge L2 des Halteabschnitts (7) eine Querschnittsverjüngung (24) ausgebildet ist
und/oder
- **dass** ein mechanisches Gesamt-Flächenträgheitsmoment des Halteabschnitts (7) in der Längsrichtung (10) nach unten hin um wenigstens 20%, vorzugsweise um wenigstens 30%, zunimmt.

2. Tragkonstruktion (1) nach Anspruch 1,
- wobei die Halteabschnitte (7) der Pfosten (4) jeweils einteilig mittels eines einzigen Längsprofils (9) ausgestaltet sind und wobei die Querschnittsverjüngung (24) mittels einer axialen Variation eines Querschnitts (25) dieses Längsprofils (9) in dessen Längsrichtung (10) erzielt ist.

3. Tragkonstruktion (1) nach Anspruch 1,
- wobei die Halteabschnitte (7) der Pfosten (4) jeweils mindestens zweiteilig mittels wenigstens zweier Längsprofile (9a, 9b) ausgestaltet sind, die sich teilweise oder vollständig überlappen und/oder
- insbesondere wobei ein oberer Teil (26) des Halteabschnitts (7) ausschließlich durch ein oberstes Längsprofil (9b) und ein unterer Teil (27) des Halteabschnitts (7) zumindest teilweise durch das oberste Längsprofil (9b) und durch ein unteres Längsprofil (9a) gebildet ist oder
- wobei sich die wenigstens zwei Längsprofile (9a, 9b) des Halteabschnitts (7), insbesondere das innere und das äußere Längsprofil (9a, 9b), über eine gesamte Länge L2 des Halteabschnitts (7) erstrecken und sich somit vollständig überlappen.

4. Tragkonstruktion (1) nach einem der vorhergehenden Ansprüche,
- wobei die Halteabschnitte (7) wenigstens zwei Längsprofile (9a, 9b) umfassen, die ineinander gesteckt sind und sich daher mindestens teilweise überlappen, sodass der jeweilige Halteabschnitt (7) ein inneres Längsprofil (9b) und ein äußeres Längsprofil (9a) umfasst, und/oder
- wobei wenigstens zwei Längsprofile (9a, 9b) des jeweiligen Halteabschnitts (7)
- flächig aneinander anliegen und/oder
- an einem unteren Befestigungsabschnitt (6) des jeweiligen Pfostens (4), der die Verbindung zum Erdreich (34) herstellt, befestigt sind.

5. Tragkonstruktion (1) nach einem der vorhergehenden Ansprüche,
- wobei eine Verjüngung (24) eines Längsprofils (9, 9b) des Halteabschnitts (7) durch einen Unterteilungstrennschnitt (21) durch
- ein ursprüngliches Längsprofil (9) oder durch
- ein Rohmaterial, aus welchem das Längsprofil (9) durch Umformung hergestellt wurde,
erzielt wurde.

6. Tragkonstruktion (1) nach einem der vorhergehenden Ansprüche, wobei eine jeweilige x-Breite (22) und/oder eine jeweilige y-Breite (28) des jeweiligen Halteabschnitts (7) über wenigstens 30% der Gesamtlänge L2 des Halteabschnitts (7) verringert ist im Vergleich zu einer jeweiligen maximalen x-Breite/y-Breite des Halteabschnitts (7),
- vorzugsweise wobei die Verringerung mindestens 10% beträgt.

7. Tragkonstruktion (1) nach einem der vorhergehenden Ansprüche, wobei sich eine jeweilige x-Breite (22) von Seitenflächen (19a, 19b) eines Längsprofils (9, 9b) des jeweiligen Halteabschnitts (7) in der Längsrichtung (10) nach oben hin, vorzugsweise kontinuierlich, verringert,
- insbesondere wobei in einer jeweiligen an die Seitenflächen (19a, 19b) angrenzenden Stirnfläche (18) des jeweiligen Halteabschnitts (7) jeweilige Durchstecköffnungen (17) im jeweiligen Längsprofil (9b, 9c) ausgebildet sind und wobei in die jeweilige Durchstecköffnung (17) ein zugehöriger Riegel (5) mehr oder weniger tief eingesteckt ist,
- vorzugsweise wobei eine y-Breite (28) der Stirnfläche (18) an wenigstens zwei Durchstecköffnungen (17) gleich groß ist, und/oder
- wobei eine x-Breite und/oder eine y-Breite (28) des Halteabschnitts (7) im Bereich eines obersten Riegels (4) oder im Bereich eines ersten, insbesondere obersten, PV-Moduls (2) wenigstens 10% kleiner gewählt ist als im Bereich eines untersten Riegels (4) oder im Bereich eines zweiten, insbesondere untersten, PV-Moduls (2),
- insbesondere wobei der Halteabschnitt (7) mehrteilig aus wenigstens zwei Längsprofilen (9b, 9c) aufgebaut ist.

8. Tragkonstruktion nach einem der vorhergehenden Ansprüche, wobei die jeweiligen Halteabschnitte (7) / die jeweiligen Längsprofile (9b) in einem unteren Teil (27) mittels eines geschlossen umlaufenden unteren Profilquerschnitts (12) und in einem oberen Teil (26) mittels eines halbseitig offenen oberen Profilquerschnitts (13) ausgebildet sind,
- insbesondere wobei der halboffene obere Profilquerschnitt (13) in Folge
- eines Auftrennens eines Längsprofils (9) mit ursprünglich geschlossenem Profilquerschnitt oder
- eines Unterteilungstrennschnitts (21) durch ein Rohmaterial, aus welchem das Längsprofil (9b) durch Umformung hergestellt wurde,
ausgebildet wurde/ entstanden ist.

9. Tragkonstruktion nach einem der vorhergehenden Ansprüche, wobei eine das lokale Flächenträgheitsmoment des Pfostens (4) bestimmende Querschnittslänge (14) eines/des oberen Profilquerschnitts (13) in einem oberen Teil (26) des jeweiligen Halteabschnitts (7)/des jeweiligen Längsprofils (9b) in der Längsrichtung (10) nach oben hin, vorzugsweise kontinuierlich, abnimmt.

10. Tragkonstruktion nach einem der vorhergehenden Ansprüche, wobei wenigstens 70%, insbesondere wenigstens 85%, oder sogar eine Gesamtheit einer Länge des jeweiligen Halteabschnitts (7) im Querschnitt halboffen ausgestaltet ist,
- vorzugsweise während wenigstens ein weiterer Abschnitt des jeweiligen Pfostens (4), insbesondere ein/der jeweilige untere Befestigungsabschnitt (6, 9a), im Querschnitt geschlossen ausgestaltet ist.

11. **Tragkonstruktion nach dem Oberbegriff von Anspruch 1,** insbesondere nach einem der vorhergehenden Ansprüche,
**dadurch gekennzeichnet,**
- **dass** sich eine jeweilige mechanische Tragfähigkeit der Halteabschnitte (7) der Pfosten (4),
- insbesondere ein axialer Verlauf eines Flächenträgheitsmoments des jeweiligen Halteabschnitts (7),
zwischen einzelnen der Pfosten (4) zumindest teilweise unterscheidet, weil ein jeweiliges Ausmaß einer/der jeweiligen Querschnittsverjüngung (24) des jeweiligen Halteabschnitts (7) zwischen einzelnen der Pfosten (4) variiert,
- insbesondere da sich jeweilige axiale Überlappungslängen (11) von den Halteabschnitt (7) ausbildenden Längsprofilen (9a, 9b) von Pfosten (4) zu Pfosten (4) unterscheiden.

12. **Photovoltaik-Anlage (3),** umfassend
- eine Tragkonstruktion (1) nach einem der vorhergehenden Ansprüche sowie
- eine Vielzahl an bifazialen PV-Modulen (2) die aufrecht stehend an der Tragkonstruktion (1) angeordnet sind,
- insbesondere wobei
- die PV-Module (2) an horizontal verlaufenden Riegeln (5) montiert sind, die jeweils zwei der Pfosten (4) der Tragkonstruktion (1) miteinander verbinden oder wobei
- die PV-Module (2) zwischen den Pfosten (4) angeordnet und an den Pfosten (4) montiert sind, insbesondere wobei die Tragkonstruktion (1) keine die Pfosten verbindenden Riegel (5) aufweist.

13. **Verwendu ng** einzelner oder mehrerer Längsprofile (9a, 9b), um einen Halteabschnitt (7) eines Pfostens (4) einer Tragkonstruktion (1) gemäß einem der vorhergehenden Ansprüche 1 bis 11, auszubilden,
- wobei hierzu eine erfindungsgemäße Querschnittsverjüngung (24) am Halteabschnitt (7) ausgestaltet ist
- durch axiale Variation des Querschnitts von wenigstens einem der Längsprofile (9a, 9b)
und/oder
- indem wenigstens zwei der Längsprofile (9a, 9b) ineinander gesteckt sind,
- bevorzugt derart, dass sich ein Querschnitt (25) des so ausgebildeten Halteabschnitts (7) in einer Längsrichtung (10) des Halteabschnitts (7) nach oben hin derart verjüngt, dass über wenigstens 20% einer Gesamtlänge L2 des Halteabschnitts (7) die Querschnittsverjüngung (24) ausgebildet ist.

14. **Verfahren zur Herstellung von Pfosten (4)** einer Tragkonstruktion (1) gemäß dem Oberbegriff von Anspruch 1, insbesondere gemäß einem der Ansprüche 1 bis 11,
**dadurch gekennzeichnet,**
- **dass** ein ursprüngliches Längsprofil (9), vorzugsweise von gleichmäßigem/konstantem und/oder geschlossenem Querschnitt, mittels eines Trennverfahrens in zwei komplementäre Teile (23a, 23b) aufgeteilt wird, sodass jedes der beiden Teile (23a, 23b) jeweils einen Halteabschnitt (7a, 7b) eines jeweiligen Pfostens (4) ausbildet,
- wobei ein Verlauf eines bei dem Trennverfahren eingesetzten Unterteilungstrennschnitts (21) eine jeweilige Querschnittsverjüngung (24) des jeweiligen Halteabschnitts (7a, 7b) vorgibt, die sich jeweils über wenigstens 30% einer Gesamtlänge des jeweiligen Teils (23a, 23b) erstreckt
ODER
- **dass** ein Blech (31) mittels eines Trennverfahrens in mindestens zwei Blechteile (32) aufgetrennt wird und dass aus den mindestens zwei Blechteilen (32) durch Umformung entlang von Biegelinien (33) zwei Halteabschnitte (7a, 7b) eines jeweiligen Pfostens (4) gewonnen werden, wobei sich der jeweilige Halteabschnitt (7a, 7b) im Querschnitt zu einem jeweiligen Ende hin verjüngt und
- wobei ein Verlauf eines bei dem Trennverfahren eingesetzten Unterteilungstrennschnitts (21) eine jeweilige Querschnittsverjüngung (24) des jeweiligen Halteabschnitts (7a, 7b) vorgibt, vorzugsweise die sich jeweils über wenigstens 40% einer Gesamtlänge des jeweiligen Halteabschnitts (7a, 7b) erstreckt.

15. Verfahren nach dem vorhergehenden Anspruch,
- wobei der jeweilige Halteabschnitt (7a, 7b) aus wenigstens einem der mindestens zwei Blechteile (32) mittels eines Verbindungsverfahrens wie beispielsweise Schrauben, Nieten oder Schweißen, insbesondere unter Verwendung eines Zwischenelements, hergestellt wird und/oder
- wobei das ursprüngliche Längsprofil (9) als ein kastenförmiges Längsprofil (9) mit einer planen Stirnfläche (18) und einer der Stirnfläche (18) gegenüberliegenden planen rückseitigen Rückenfläche (29) ausgestaltet ist,
- insbesondere sodass nach dem Auftrennen des ursprünglichen Längsprofils (9) in die beiden komplementären Teile (23a, 23b) jedes dieser Teile eine plane Stirnfläche (18/29) bietet, in welcher Durchstecköffnungen (17) ausgebildet werden können oder separate Halteelemente flächig befestigbar sind.
